# EUROPEAN PATENT APPLICATION

(11) **EP 4 231 632 A1**
(43) Date of publication of application: **23.08.2023**
(21) Application number: 23153948.7
(22) Date of filing: 30.01.2023
(51) Int. Cl.: H04N 7/14, H04N 7/15

(54) **DISPLAY SYSTEM, DISPLAY METHOD, AND CARRIER MEDIUM**

(30) Priority: 17.02.2022 JP 2022023067; 25.11.2022 JP 2022188591
(71) Applicant: Ricoh Company, Ltd., Tokyo 143-8555 (JP)
(72) Inventor: ONO, Ryutarou, Tokyo, 143-8555 (JP); KAMEKURA, Takahiro, Tokyo, 143-8555 (JP); ISHII, Shigeyuki, Tokyo, 143-8555 (JP)
(74) Representative: SSM Sandmair

(57) **Abstract**

A display system includes a display unit (19) to display, on a display, a record of a communication in a form of a video created based on screen information and surrounding image information. The screen information has been displayed by a teleconference application on a communication terminal participating in the communication and acquired by an information recording application. The surrounding image information has been acquired by a device and represents an image of surroundings around the device. The display unit (19) displays the surrounding image information, talker image information cut out from the surrounding image information, representing a person speaking in the communication, and the screen information.

## Description

### BACKGROUND

### Technical Field

Embodiments of the present disclosure relate to a display system, a display method, and a carrier medium.

### Related Art

Known teleconference systems transmit images and audio from one site to one or more other sites in real time to allow users at remote sites to conduct a meeting using the images and the audio.

Further, there is a technology for displaying a minutes screen based on information obtained by recording an image and sound in 360 degrees. For example, Japanese Unexamined Patent Application Publication No. 2021-105688 discloses displaying, based on information obtained by recording an image and sound in 360 degrees, a minutes screen that includes an area for displaying participants in a conference room and an utterance history area for displaying speeches in chronological order for each utterance.

In the related art, the system does not display a record of telecommunication (or remote communication) created based on a content displayed (screen information) by an application being active at that time (application being executed in the telecommunication) and image information of the surroundings. In other words, even if information obtained by capturing a conference room is displayed, the information is not displayed together with the screen (window) of the application, such as a teleconference application, displayed in the telecommunication. For this reason, the related art does not enable a user to view the situation of the telecommunication in which the inside of the conference room is captured in a video.

### SUMMARY

An object of the present disclosure is to display a record of a communication based on the screen information having been displayed by an application executed in the communication and image information of the surrounding of a device.

In one aspect, a display system includes a display unit to display, on a display, a record of a communication in a form of a video created based on screen information and surrounding image information. The screen information has been displayed by a teleconference application on a communication terminal participating in the communication and acquired by an information recording application. The surrounding image information has been acquired by a device and represents an image of surroundings around the device. The display unit displays the surrounding image information, talker image information cut out from the surrounding image information, representing a person speaking in the communication, and the screen information.

In another aspect, a display includes displaying, on a display, a record of a communication in a form of a video created based on screen information and surrounding image information. The screen information has been displayed on a communication terminal participating in the communication and acquired by an information recording application. The surrounding image information has been acquired by a device and represents an image of surroundings around the device. The displaying includes displaying the surrounding image information, talker image information cut out from the surrounding image information, representing a person speaking in the communication, and the screen information.

In another aspect, a carrier medium carries computer readable codes for controlling a computer system to carry out the method described above.

According to an aspect of the present disclosure, a record of a communication created based on the screen information having been displayed by the application executed in the communication and image information of surroundings around the device is displayed so that a user can view a situation of the communication during which scenes in a conference room has been recorded in a video.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating an overview of creation of a record in which a window of an application executed in a teleconference is stored together with a panoramic image of surroundings, according to one embodiment of the present disclosure;
FIG. 2 is a block diagram of a configuration of a record display system according to one embodiment of the present disclosure;
FIG. 3 is a diagram of a hardware configuration of an information processing system and a communication terminal according to one embodiment of the present disclosure;
FIG. 4 is a diagram of a hardware configuration of a meeting device according to one embodiment of the present disclosure;
FIGS. 5A and 5B are diagrams illustrating an image capture range of the meeting device according to one embodiment of the present disclosure;
FIG. 6 is a schematic diagram illustrating a panoramic image and a method of cutting out talker images from the panoramic image, according to one embodiment of the present disclosure;
FIG. 7 is a block diagram illustrating functional configurations in blocks of the communication terminal, the meeting device, and the information processing system of the record display system according to one embodiment of the present disclosure;
FIG. 8 illustrates items of information on a recorded video stored in an information storage area according to one embodiment of the present disclosure;
FIG. 9 illustrates app-side conference information stored in an app-side conference information storage area according to one embodiment of the present disclosure;
FIG. 10 illustrates information on records, stored in a record information storage area according to one embodiment of the present disclosure;
FIG. 11 illustrates conference information stored in a conference information storage area according to one embodiment of the present disclosure;
FIG. 12 is a diagram illustrating a structure of text data stored in a storage service system according to one embodiment of the present disclosure;
FIG. 13 is a diagram illustrating an example of an initial screen displayed by an information recording application operating on the communication terminal after login;
FIG. 14 is diagram illustrating an operation to be performed when a fixed display button is on, according to one embodiment of the present disclosure;
FIG. 15 is a diagram illustrating an example of a device unrecognized screen;
FIG. 16 is a diagram illustrating an example of a recording setting screen displayed by the information recording application;
FIG. 17 is a diagram illustrating a display example of a recorded content confirmation window when a camera toggle button is on and a personal computer (PC) screen toggle button is off;
FIG. 18 is a diagram illustrating another display example of the recorded content confirmation window when the camera toggle button is on and the PC screen toggle button is on;
FIG. 19 is a diagram illustrating an example of a recording-in-progress screen displayed by the information recording application during recording;
FIG. 20 is a diagram illustrating an example of a conference list screen displayed by the information recording application;
FIG. 21 is a diagram illustrating an example of a video replay screen displayed by the information recording application after a video is selected;
FIG. 22 is a diagram illustrating an example of an edit screen for editing a video;
FIG. 23 is a sequence chart illustrating an example of recording a panoramic image, a talker image, and an application screen by the information recording application, according to one embodiment of the present disclosure;
FIG. 24 is an example of a sequence diagram illustrating an example of downloading a video by the information recording application, according to one embodiment of the present disclosure;
FIG. 25 is a diagram of an example of the video replay screen on which a panoramic image and a talker image are displayed;
FIG. 26 is a diagram of an example of a video replay screen on which talker images and an application screen are displayed when a video and content button is pressed;
FIG. 27 is a diagram of an example of the video replay screen on which an application screen is displayed when a content button is pressed;
FIG. 28 is a diagram illustrating an example of switching of a video displayed in a display field, performed in response to an operation on a video selection menu;
FIG. 29 is a sequence diagram of an example of a process in which the information recording application switches the video to be displayed in the display field in response to a user operation;
FIG. 30 is a sequence diagram illustrating an example of a process in which the information recording application displays text data in association with the display time of the video displayed in the display field;
FIGS. 31A and 31B are schematic diagrams illustrating an example of search of text data and corresponding display of a video; and
FIG. 32 is a sequence diagram illustrating an example of a process in which the information recording application displays the video in the display field in association with a retrieved text.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A record display system and a display method carried out by the record display system will be described below as example embodiments of the present disclosure.

### Example of Method of Creating Minutes of Teleconference

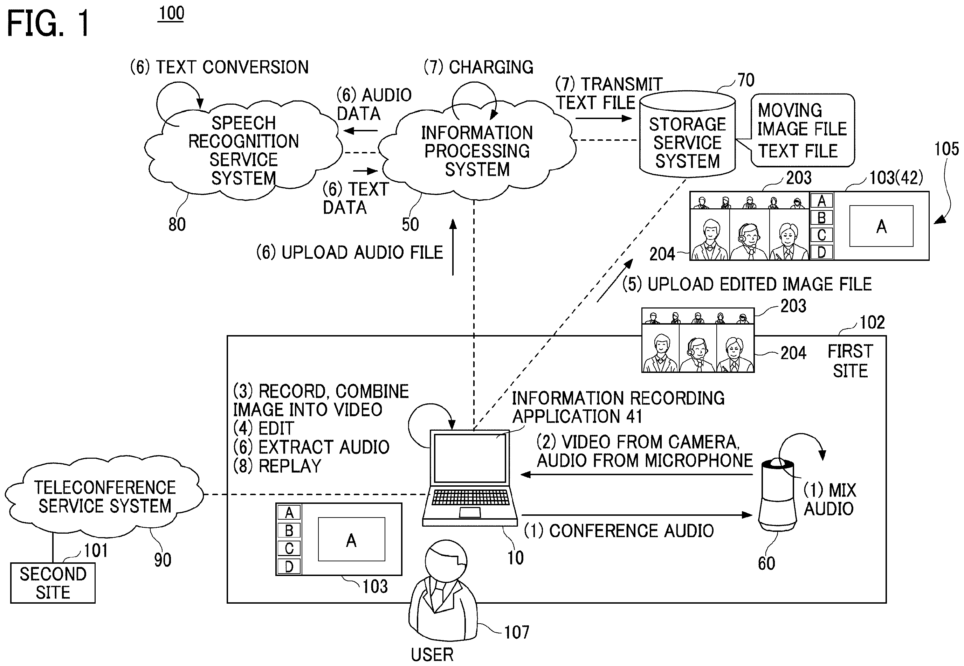

A description is now given of an outline of a method for creating minutes using a panoramic image and a screen display by an application (also "app") with reference to FIG. 1. FIG. 1 is a diagram illustrating an overview of creation of a record in which a screen display of the application executed in a teleconference is stored together with a panoramic image of the surroundings. As illustrated in FIG. 1, a user at a first site 102 uses a teleconference service system 90 to host a teleconference with another user at a second site 101.

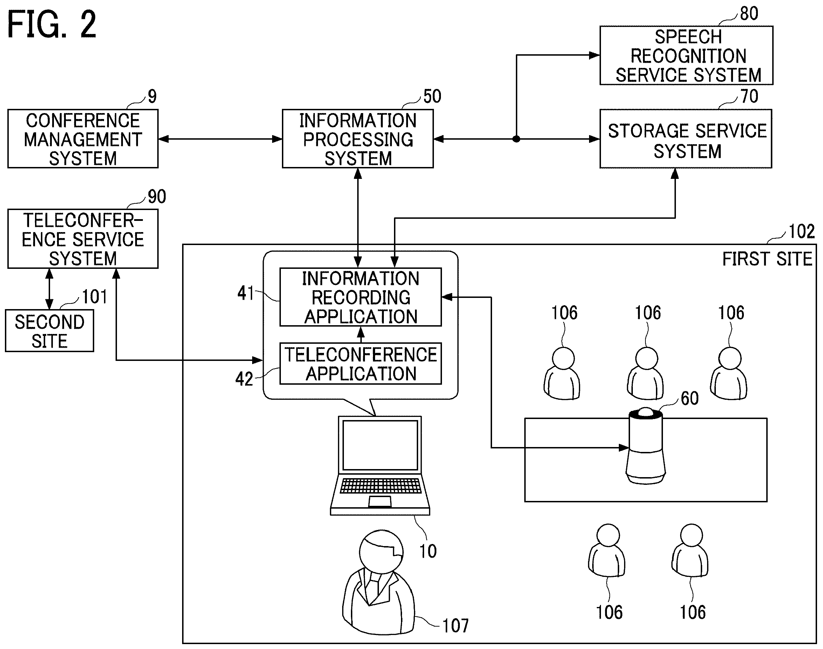

A record display system 100 according to the present embodiment includes a meeting device 60 and a communication terminal 10. The meeting device 60 includes an image-capturing device that captures an image of 360-degree surroundings, a microphone, and a speaker. The meeting device 60 processes information of the captured image of the surroundings to obtain a horizontal panoramic image (hereinafter referred to as a panoramic image). The record display system 100 uses the panoramic image and a screen displayed by an application executed on the communication terminal 10, to create a record (meeting minutes). The record display system 100 combines audio received by a teleconference application 42 (FIG. 2) with audio received by the meeting device 60 and includes the resultant audio data in the record. In the present embodiment, the record display system 100 may display (replay) the record to enable the user to view the record, without creating the record. The overview will be described below.
(1) On the communication terminal 10, an information recording application 41 described below and the teleconference application 42 are operating. Another application such as a document display application may also be operating. The information recording application 41 transmits the audio output from the communication terminal 10 (including the audio received by the teleconference application 42 from the second site 101) to the meeting device 60. The meeting device 60 mixes (combines) the audio received by the meeting device 60 and the audio received by the teleconference application 42.
(2) The meeting device 60 cuts out an image (an en example of talker image information) of a person who is speaking (hereinafter "talker") from a panoramic image based on the direction in which audio is received by the microphone of the meeting device 60, to generate a talker image. The meeting device 60 transmits both the panoramic image and the talker image to the communication terminal 10.
(3) The information recording application 41 operating on the communication terminal 10 displays a panoramic image 203 and a talker image 204. The information recording application 41 stores an image of the application screen selected by the user (e.g., a screen 103 of the teleconference application 42), the panoramic image 203, and the talker image 204. The application screen is an example of screen information (described below) displayed by an application such as the teleconference application 42. Each of the application screen image, the panoramic image 203, and the talker image 204 is repeatedly stored as a moving image (video). Hereinafter, any of the application screen, the panoramic image 203, and the talker image 204 may be simply referred to as a "video" when not distinguished from each other.
(4) The information recording application 41 receives an editing operation such as cutting off of unnecessary parts by the user and completes the video. The video is a part of the record.
(5) The information recording application 41 uploads the video and the audio data to a storage service system 70 to be stored.
(6) The information recording application 41 transmits the audio data (audio file) and a request of text conversion of the audio data to the information processing system 50. The information processing system 50 transmits the audio data to a speech recognition service system 80 that converts the audio data into text data. The speech recognition service system 80 converts the audio data into text data. The text data includes data indicating the elapsed time from the start of recording to the utterance.

In the case of real-time conversion into text data, the meeting device 60 transmits the audio data directly to the information processing system 50.

(7) The information processing system 50 transmits the text data (text file) to the storage service system 70 to be stored in addition to the video. The text data is a part of the record.

The information processing system 50 is capable of charging a user with a fee according to the service used. For example, the fee is calculated based on the amount of the text data, the file size of the video, or the processing time.

(8) The information recording application 41 can replay the video together with the audio data. The information recording application 41 can also display text data corresponding to the video. In one example of the arrangement in a combined image 105, as illustrated in FIG. 1, the panoramic image 203 and the talker image 204 are on the left, and the screen 103 of the teleconference application 42 is on the right.

As described above, when the video is replayed, the panoramic image that is a surrounding image including the user, the talker image, and the screen of the application displayed in the teleconference, such as the teleconference application 42, are displayed. Therefore, when a participant of the teleconference or a person who is not a participant views the video as the minutes of the teleconference, the panoramic image, the talker image, and the window of the application are displayed on one screen. Thus, scenes of the teleconference are reproduced with a sense of presence.

### Terminology

The term "application (app)" refers to software developed or used for a specific function or purpose. Types of such applications include a native application and a web application. A web application (a cloud application that provides a cloud service) may operate in cooperation with a native application or a web browser.

The expression "application being executed" refers to an application in a state from the activation of application to the end of the application. An application is not necessarily active (an application in the foreground) and may operate in the background.

The term "device" refers to a device having capabilities of capturing an image of the surroundings of the device and collecting audio from the surroundings. In one example, the device is used as being connected to the communication terminal. In another example, the device is built in the communication terminal. In another example, the device is used as being connected to the cloud service, instead of being directly connected to the communication terminal. In the present embodiment, the device is referred to as a "meeting device."

The meeting device captures an image of the surroundings thereof (for example, in an area or space of 180 to 360 degrees in the horizontal direction) to acquire image information and performs predetermined processing on image information of the curved surface acquired by the meeting device. The resultant image information is referred to as the image information of the surroundings acquired by the meeting device. Examples of the predetermined processing include various kinds of processing for generating, from the information of a captured image, the image information of the surroundings. An example is flattening on a curved-surface captured image. Examples of the predetermined processing may further include, in addition to creating a peripheral image, cutting out an image of a talker, and combining the image of the surroundings with the talker image. In the present embodiment, the image of the surroundings is referred to as "panoramic image." The panoramic image is an image having an angle of view of 180 degrees to 360 degrees in substantially the horizontal direction. The panoramic image is not necessarily captured by a single meeting device, and may be captured by a combination of a plurality of imaging devices each having an ordinary angle of view. Although it is assumed that the meeting device being used is placed, for example, on a table, for grasping scenes of a teleconference at a site or the surroundings, aspects of the present disclosure are applicable to a device used for surveillance (security, disaster prevention, etc.), watching (childcare, nursing, etc.), or analyzing scenes of a site (solutions, marketing, etc.).

The term "record" refers to information recorded by the information recording application 41 and stored in a viewable manner in association with identification information of a certain conference (meeting). Examples of contents of the record are as follows:
- a moving image (video) generated based on screen information (displayed contents) displayed by a selected application (e.g., a teleconference application) and surrounding image information represents an image of the surroundings around the device, acquired by the device;
- audio data acquired and combined by the teleconference application (the communication terminal) and the meeting device located at the site in a conference (meeting);
- text data obtained by converting the acquired audio data; and
- other data and images that are information related to the conference (meeting), such as a document file used in the conference, an added memo, translation data of the text data, and images and stroke data generated by a cloud electronic whiteboard service in the conference.

When the information recording application 41 records the screen of the teleconference application 42 and the situation of the conference at the site, the record may serve as the minutes of the conference. The minutes are examples of the record. The name of the record may vary depending on the contents of the teleconference or contents carried out at the site. For example, the record may be a record of communication, a record of a scene (situation) at a site, or a record of an event. Further, the record includes files of a plurality of formats, such as a video file (a composite moving image or the like), an audio file, a text data (obtained by performing speech recognition on audio) file, a document file, an image file, and a tabular form file. Such files are associated with the identification information of the conference and can be viewed collectively or selectively in time series.

The term "tenant" refers to a group of users (such as a company, a local government, or an organization that is a part of such a company or local government) that has a contract to receive a service from a service provider. In the present embodiment, assuming that the tenant has a contract with the service provider, creation of the record and conversion into text data are performed.

The term "telecommunication" refers to audio-and-video-based communication with a counterpart at a physically remote site, using software and communication terminals.

A teleconference is an example of telecommunication. A conference may also be referred to as an assembly, a meeting, an arrangement, a consultation, an application for a contract or the like, a gathering, a meet, a meet-up, a seminar, a workshop, a study meeting, a study session, a training session, or the like.

The term "site" refers to a place where an activity is performed. A conference room is an example of the site. The conference room is a room set up to be used primarily for a conference. The term "site" may also refer to various places such as a home, a reception desk, a store, a warehouse, and an outdoor site, and may refer to any place or space where a communication terminal, a device, or the like is installable.

The term "audio" refers to an utterance made by a person, a surrounding sound, or the like. The term "audio data" refers to data to which the audio is converted. However, in the present embodiment, the audio and the audio data are not strictly distinguished from each other.

### System Configuration

A description is now given of a system configuration of the record display system 100 according to the present embodiment with reference to FIG. 2. FIG. 2 illustrates an example of the configuration of the record display system 100. FIG. 2 illustrates one site (the first site 102) among multiple sites at which participants of a teleconference are present. The communication terminal 10 at the first site 102 communicates via a network with the information processing system 50, the storage service system 70, and the teleconference service system 90. The meeting device 60 is placed at the first site 102. The communication terminal 10 is connected via a universal serial bus (USB) cable or the like to the meeting device 60 to communicate therewith.

At least the information recording application 41 and the teleconference application 42 operate on the communication terminal 10. The teleconference application 42 can communicate with communication terminals at the second site 101 via the teleconference service system 90 that resides on the network to allow users at the remote sites to participate in the teleconference. The information recording application 41 uses functions of the information processing system 50 and the meeting device 60 to generate the record of the teleconference hosted by the teleconference application 42.

In the present embodiment, a description is given of an example in which the record of a teleconference is generated. However, in another example, the conference is not necessarily held among remote sites. That is, aspects of the present embodiment are applicable to a conference held among the participants present at one site. In this case, audio collected by the meeting device 60 is stored without being combined. The rest of the process performed by the information recording application 41 is the same.

The communication terminal 10 includes a built-in (or external) camera having an ordinary angle of view. The camera of the communication terminal 10 captures an image of a front space including a user 107 who operates the communication terminal 10. Images captured by the camera having an ordinary angle of view are not panoramic images. In the present embodiment, the built-in camera having the ordinary angle of view primarily captures planar images that are not curved like spherical images. The communication terminal 10 includes a microphone built therein (or may include a microphone externally attached thereto). The microphone collects audio from the surroundings, such as from the user 107 operating the communication terminal 10. Thus, the user can participate in a teleconference using the teleconference application 42 as usual without paying attention to the information recording application 41. The information recording application 41 and the meeting device 60 do not affect the teleconference application 42 except for an increase in the processing load of the communication terminal 10. The teleconference application 42 can transmit a panoramic image or a talker image captured by the meeting device 60 to the teleconference service system 90.

The information recording application 41 is an application that communicates with the meeting device 60 and records the information, to generate the record of the conference. The meeting device 60 is a device including an imaging device that can capture a panoramic image, a microphone, and a speaker and is used for a conference. The camera of the communication terminal 10 can capture an image of only a limited range of the front space. In contrast, the meeting device 60 can capture an image of the entire surroundings (not necessarily the entire surroundings) around the meeting device 60. The meeting device 60 can always keep a plurality of participants 106 illustrated in FIG. 2 within the angle of view.

Further, the meeting device 60 clips a talker image from a panoramic image and combines audio data received by the meeting device 60 and audio data output by the communication terminal 10 (including audio data received by the teleconference application 42). The place where the meeting device 60 is placed is not limited to on a desk or a table, and the meeting device 60 may be disposed at any place of the first site 102. Since the meeting device 60 can capture a spherical image, the meeting device 60 may be disposed on a ceiling, for example. The meeting device 60 may be installed at the second site 101 or any of the sites where the participants are present.

The information recording application 41 displays a list of applications operating on the communication terminal 10, stores the above-described record (video), replays the video, and receives editing. Further, the information recording application 41 displays a list of teleconferences already held or are to be held in the future. The list of teleconferences is used in information on the record to allow the user to link a teleconference with the record.

The teleconference application 42 is an application that establishes a connection to and communicates with other communication terminals at the second site 101, transmits and receives an image and audio, displays the image and outputs the audio to allow the communication terminal 10 to perform telecommunication with the other communication terminals. The teleconference application 42 may be referred to as a telecommunication app, a remote information sharing application, or the like.

The information recording application 41 and the teleconference application 42 each may be a web application or a native application. A web application is an application in which a program on a web server cooperates with a program on a web browser or a native application to perform processing, and is not to be installed on the communication terminal 10. A native application is an application that is installed and used on the communication terminal 10. In the present embodiment, both the information recording application 41 and the teleconference application 42 are described as native applications.

The communication terminal 10 may be a general-purpose information processing apparatus having a communication function, such as a personal computer (PC), a smartphone, or a tablet terminal, for example. Alternatively, the communication terminal 10 is, for example, an electronic whiteboard, a game console, a personal digital assistant (PDA), a wearable PC, a car navigation system, an industrial machine, a medical device, or a networked home appliance. The communication terminal 10 may be any apparatus on which at least the information recording application 41 and the teleconference application 42 operate.

The information processing system 50 is implemented by one or more information processing apparatuses deployed over a network. The information processing system 50 includes one or more server applications that perform processing in cooperation with the information recording application 41, and provides infrastructure services. The server applications manage, for example, a list of teleconferences, records of teleconferences, and various settings and storage paths.

The infrastructure service performs user authentication, makes a contract, performs charging processing, and the like.

All or some of the functions of the information processing system 50 may reside in a cloud environment or in an on-premises environment. The information processing system 50 may be implemented by a plurality of server apparatuses or a single information processing apparatus. For example, the server applications and the infrastructure service may be provided by separate information processing apparatuses. Further, each function of the server applications may be provided by an individual information processing apparatus. The information processing system 50 may be integral with a conference management system 9 described later, the storage service system 70, and the speech recognition service system 80.

The conference management system 9 is a system that manages information on a conference hosted by a tenant that uses the information processing system 50. The information processing system 50 acquires conference information from the conference management system 9 and manages the conference information in association with the record.

The storage service system 70 is a storage on a network and provides a storage service for receiving files and the like to be stored. Examples of the storage service system 70 include MICROSOFT ONEDRIVE, GOOGLE WORKSPACE, and DROPBOX. The storage service system 70 may be on-premises network-attached storage (NAS) or the like.

The speech recognition service system 80 provides a service of performing speech recognition on audio data and converting the audio data into text data. The speech recognition service system 80 may be a general-purpose commercial service or part of the functions of the information processing system 50. The service system set for and used as the speech recognition service system 80 may be different for each user, each tenant, or each conference.

### Hardware Configuration

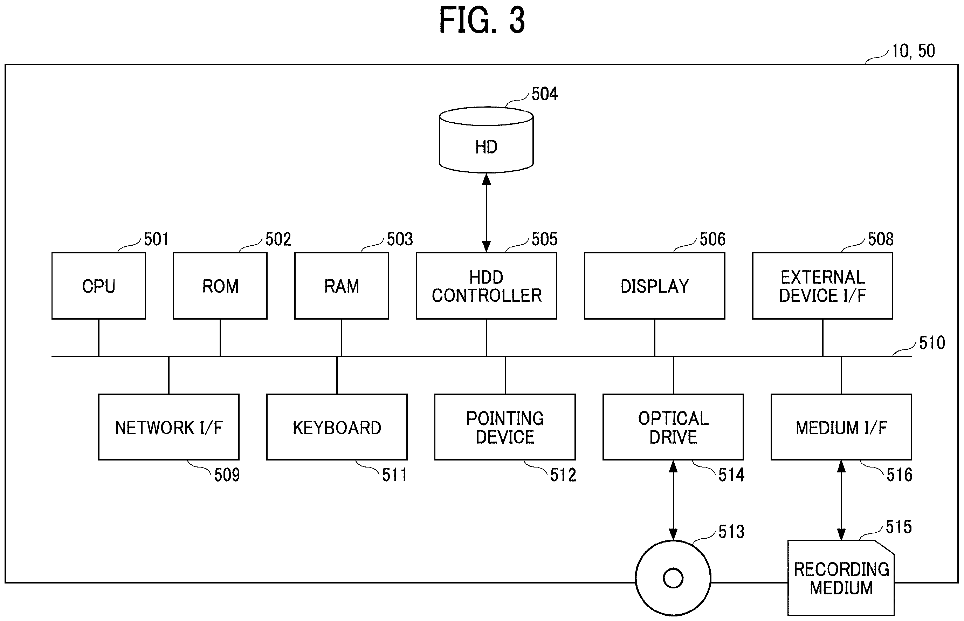

A hardware configuration of the information processing system 50 and the communication terminal 10 according to the present embodiment will be described with reference to FIG. 3.

### Information Processing System and Communication Terminal

FIG. 3 is a diagram illustrating an example of a hardware configuration of the information processing system 50 and the communication terminal 10 according to the present embodiment. As illustrated in FIG. 3, the information processing system 50 and the communication terminal 10 each are implemented by a computer and each include a central processing unit (CPU) 501, a read-only memory (ROM) 502, a random access memory (RAM) 503, a hard disk (HD) 504, a hard disk drive (HDD) controller 505, a display 506, an external device interface (I/F) 508, a network I/F 509, a bus line 510, a keyboard 511, a pointing device 512, an optical drive 514, and a medium I/F 516.

The CPU 501 controls entire operations of the information processing system 50 and the communication terminal 10. The ROM 502 stores programs such as an initial program loader (IPL) to boot the CPU 501. The RAM 503 is used as a work area for the CPU 501. The HD 504 stores various kinds of data such as a program. The HDD controller 505 controls reading or writing of various kinds of data from or to the HD 504 under the control of the CPU 501. The display 506 displays various information such as a cursor, a menu, a window, characters, and images. The external device I/F 508 is an interface for connecting various external devices. Examples of the external devices in this case include, but are not limited to, a USB memory and a printer. The network I/F 509 is an interface for performing data communication via a network. The bus line 510 is, for example, an address bus or a data bus for electrically connecting the components such as the CPU 501 illustrated in FIG. 3 with each other.

The keyboard 511 is an example of an input device including a plurality of keys for a user to input characters, numerical values, various instructions, and the like. The pointing device 512 is an example of an input device for a user to select or execute various instructions, select an item for processing, or move a cursor being displayed. The optical drive 514 controls reading or writing of various kinds of data from or to an optical recording medium 513 that is an example of a removable recording medium. The optical recording medium 513 may be a compact disc (CD), a digital versatile disc (DVD), a BLU-RAY disc, or the like. The medium I/F 516 controls reading or writing (storing) of data from or to a recording medium 515 such as a flash memory.

### Meeting Device

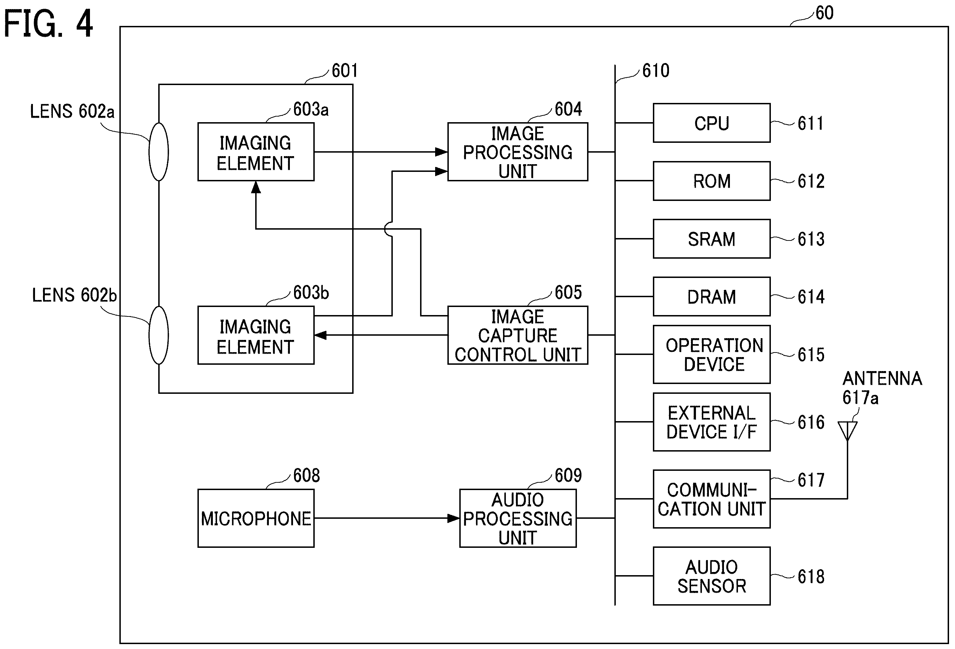

A hardware configuration of the meeting device 60 will be described with reference to FIG. 4. FIG. 4 is a block diagram illustrating an example of the hardware configuration of the meeting device 60 capable of capturing a 360-degree moving image of the surroundings. The following description is based on the assumption that the meeting device 60 uses an imaging element to capture a 360-degree moving image of the surroundings of the device at a predetermined height. The number of imaging elements may be one or two or more. The meeting device 60 is not necessarily a dedicated device and may be a PC, a digital camera, a smartphone, or the like to which an imaging unit for a 360-degree moving image is externally attached so as to implement substantially the same functions as the meeting device 60.

As illustrated in FIG. 4, the meeting device 60 includes an imaging unit 601, an image processing unit 604, an image capture control unit 605, a microphone 608, an audio processing unit 609, a CPU 611, a ROM 612, a static random access memory (SRAM) 613, a dynamic random access memory (DRAM) 614, an operation device 615, an external device I/F 616, a communication unit 617, an antenna 617a, an audio sensor 618, and a micro-USB socket terminal having a recess.

The imaging unit 601 includes wide-angle lenses 602a and 602b (so-called fisheye lenses) having an angle of view of 360 degrees to form a hemispherical image, and imaging elements 603a and 603b (image sensors) provided for the wide-angle lens 602a and 602b, respectively. The lenses 602a and 602b may be collectively referred to as "lenses 602," and the imaging elements 603a and 603b may be collectively referred to as "imaging elements 603." Each of the imaging elements 603 includes an image sensor such as a complementary metal oxide semiconductor (CMOS) sensor or a charge coupled device (CCD) sensor, a timing generation circuit, and a group of registers. The image sensor converts an optical image formed by the corresponding fisheye lens 602 into an electric signal to output image data. The timing generation circuit generates horizontal or vertical synchronization signals, pixel clocks, and the like for this image sensor. Various commands, parameters, and the like for operations of the corresponding imaging element are set in the group of registers. The imaging unit 601 may be a 360-degree camera and is an example of an image capturer that captures an image of a 360-degree space around the meeting device 60. In another example, the image capturer combines multiple data respectively obtained by multiple imaging elements (e.g., two imaging elements each having angle of view of 180 degrees), to obtain an angle of view of 360 degrees.

Each of the imaging elements 603 (image sensors) of the imaging unit 601 is connected to the image processing unit 604 via a parallel I/F bus. On the other hand, each of the imaging elements 603 of the imaging unit 601 is connected to the image capture control unit 605 via a serial I/F bus such as an inter-integrated circuit (I2C) bus. The image processing unit 604, the image capture control unit 605, and the audio processing unit 609, each of which may be implemented by a circuit, are connected to the CPU 611 via a bus 610. Additionally, the ROM 612, the SRAM 613, the DRAM 614, the operation device 615, the external device I/F 616, the terminal communication unit 617, the audio sensor 618, and the like are connected to the bus 610.

The image processing unit 604 obtains image data output from each of the imaging elements 603 through the parallel I/F bus and performs predetermined processing on the image data to create data of a panoramic image and data of a talker image from a fisheye image. Further, the image processing unit 604 combines the panoramic image and the talker image to output one moving image.

The image capture control unit 605 usually serves as a master device, whereas the imaging elements 603 usually serve as slave devices. The image capture control unit 605 sets commands and the like in the groups of registers of the imaging elements 603 through the I2C bus. The image capture control unit 605 receives the commands and the like from the CPU 611. The image capture control unit 605 obtains status data and the like in the groups of registers of the imaging elements 603 through the I2C bus. The image capture control unit 605 then sends the obtained data to the CPU 611.

The image capture control unit 605 instructs the imaging elements 603 to output image data in response to pressing of an image-capturing start button of the operation device 615 or when the image capture control unit 605 receives an image-capturing start instruction from the communication terminal 10. In some cases, the meeting device 60 supports a preview display function and a moving image display function of a display (e.g., a display of a PC or a smartphone). In this case, the image data is continuously output from the imaging elements 603 at a predetermined frame rate (frames per minute).

As described later, the image capture control unit 605 operates in cooperation with the CPU 611 to synchronize timings output of the respective image data from the imaging elements 603. In the present embodiment, the meeting device 60 does not include a display. However, in some embodiments, the meeting device 60 includes a display.

The microphone 608 converts sound into audio (signal) data. The audio processing unit 609 receives the audio data output from the microphone 608 via an I/F bus and performs predetermined processing on the audio data.

The CPU 611 controls entire operations of the meeting device 60 and performs desirable processing. The ROM 612 stores various programs to be executed by the CPU 611.

Each of the SRAM 613 and the DRAM 614 is a work memory and stores programs being executed by the CPU 611 or data being processed. In particular, in one example, the DRAM 614 stores image data being processed by the image processing unit 604 and processed data of an equirectangular projection image.

The operation device 615 collectively refers to various operation buttons such as the image-capturing start button. The user operates the operation device 615 to start image-capturing or recording, power on or off the meeting device 60, establish a connection, perform communication, and input settings such as various image-capturing modes and image-capturing conditions.

The external device I/F 616 is an interface for connection with various external devices. Examples of the external devices in this case include, but not limited to, a PC, a display, a projector, and an electronic whiteboard. The external device I/F 616 may include a USB terminal and a High-Definition Multimedia Interface (HDMI) terminal. The moving image data or still image data stored in the DRAM 614 is transmitted to an external communication terminal or recorded in an external medium via the external device I/F 616. Further, a plurality of external device I/Fs 616 may be used. In this case, while image data captured by the meeting device 60 is transmitted to a PC via USB and recorded by the PC, an image (for example, screen information displayed by a teleconference application) from the PC may be transmitted to the meeting device 60 and further transmitted from the meeting device 60 to another external device (a display, a projector, an electronic whiteboard, etc.) via HDMI to be displayed.

The terminal communication unit 617 is implemented by, for example, a network interface circuit. The terminal communication unit 617 may communicate with a cloud server via the Internet using a wireless communication technology such as Wireless Fidelity (Wi-Fi) via an antenna 617a of the meeting device 60 and transmit the moving image data and the image data stored in the DRAM 614 to the cloud server. Further, the terminal communication unit 617 may be able to communicate with nearby devices using a short-range wireless communication technology such as BLUETOOTH LOW ENERGY (BLE) or the near field communication (NFC).

The audio sensor 618 receives audio in 360 degrees in order to identify the direction from which a loud audio is input in a 360-degree space around the meeting device 60 (on a horizontal plane). The audio processing unit 609 determines a direction from which the audio of the highest volume is input in the 360-degree surroundings, based on a 360-degree audio parameter input in advance, and outputs the determined audio input direction.

Note that another sensor such as an azimuth and accelerometer or a global positioning system (GPS) sensor may be used to calculate an azimuth, a position, an angle, an acceleration, and the like for image correction or addition of position information.

The image processing unit 604 also performs processing described below.

The CPU 611 creates a panoramic image according to a method below. The CPU 611 performs predetermined camera image processing such as Bayer conversion (RGB interpolation processing) on raw data input from the image sensor that inputs a spherical video, and creates a fisheye image (a video including curved-surface images). The CPU 611 performs flattening processing such as dewarping processing (distortion correction processing) on the created fisheye video (curved-surface video) to create a panoramic image (video including flat-surface images) of a 360-degree surroundings of the meeting device 60.

The CPU 611 creates a talker image according to a method below. The CPU 611 cuts out a portion including a speaking person (talker) from the panoramic image (video including flat-surface images) of the 360-degree surroundings, to create a talker image. The CPU 611 cuts out, from the panoramic image, a talker image corresponding the direction of the talker which is the input direction of the audio determined from 360 degrees, using the audio sensor 618 and the audio processing unit 609.

For cutting out an image of a person based on the input direction of the audio, specifically, the CPU 611 cuts out a 30-degree portion around the input direction of the audio identified from 360 degrees, and performs face detection on the 30-degree portion to cut out the talker image. The CPU 611 further identifies talker images of a predetermined number of persons (e.g., three persons) who have most recently spoken, among talker images cut out from the panoramic image.

The panoramic image and one or more talker images are individually transmitted to the information recording application 41. Alternatively, the meeting device 60 may generate a single image from the panoramic image and the one or more talker images to be transmitted to the information recording application 41. In the present embodiment, the panoramic image and the one or more talker images are individually transmitted from the meeting device 60 to the information recording application 41.

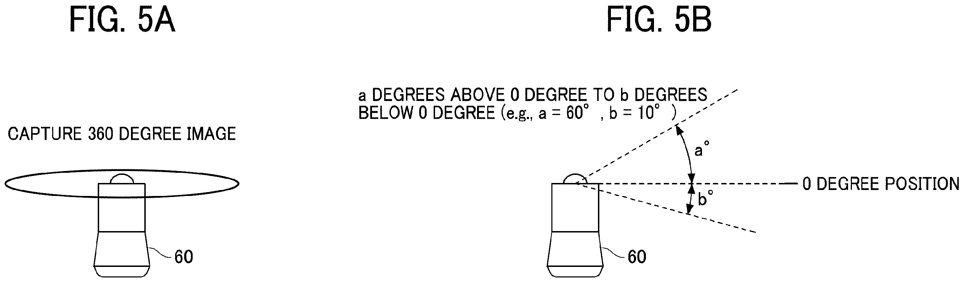

FIG. 5A and FIG. 5B are diagrams illustrating an image capture range of the meeting device 60. As illustrated in FIG. 5A, the meeting device 60 captures a 360-degree image in the horizontal direction. As illustrated in FIG. 5B, the meeting device 60 has an image capture range extending predetermined angles up and down from a 0-degree direction that is horizontal to the height of the meeting device 60.

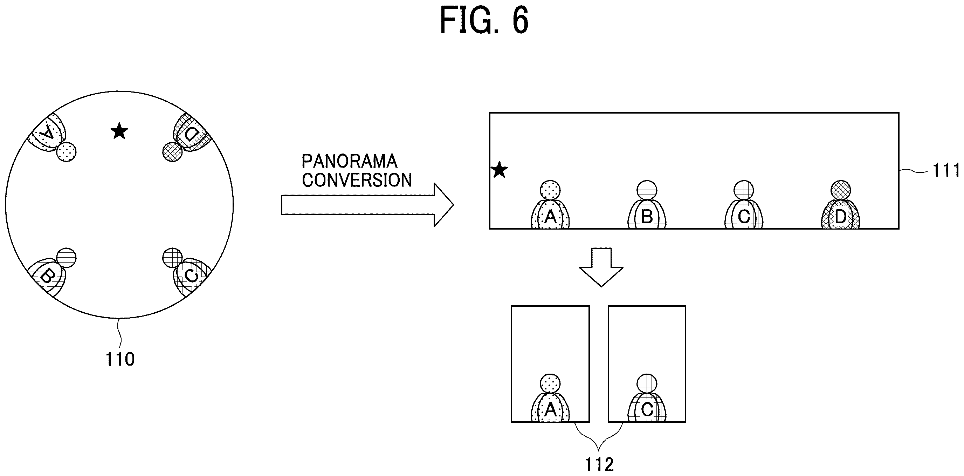

FIG. 6 is a schematic diagram illustrating a panoramic image and cutting out talker images from the panoramic image. As illustrated in FIG. 6, an image captured by the meeting device 60 is a portion 110 of a sphere, and thus has a three-dimensional shape. As illustrated in FIG. 5B, the meeting device 60 divides angles of view into the predetermined degrees up and down and by the predetermined angle in the horizontal direction to perform perspective projection conversion on each of the angles of view. A predetermined number of planar images are obtained by performing the perspective projection conversion on the entire 360-degree range in the horizontal direction without gaps. Thus, a panoramic image 111 is obtained by laterally connecting the predetermined number of planar images. Further, the meeting device 60 performs face detection in a predetermined range centered around the input direction of audio in the panoramic image, and cuts out an image extending 15 degrees each (30 degrees in total) to the left and right from the center of the human face, to generate each talker image 112.

### Functions

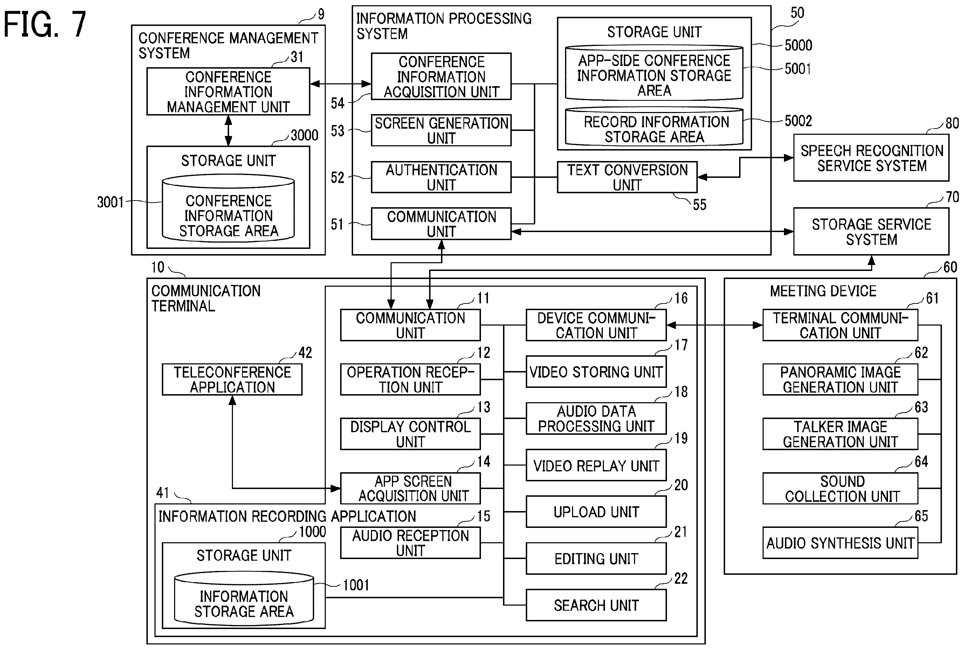

A description is given of a functional configuration of the record display system 100 according to the present embodiment with reference to FIG. 7. FIG. 7 is a block diagram illustrating functional configurations of the communication terminal 10, the meeting device 60, and the information processing system 50 of the record display system 100 according to the present embodiment.

### Communication Terminal

The information recording application 41 operating on the communication terminal 10 implements a communication unit 11, an operation reception unit 12, a display control unit 13, an app screen acquisition unit 14, an audio reception unit 15, a device communication unit 16, a video storing unit 17, an audio data processing unit 18, a video replay unit 19 (display unit), an upload unit 20, an editing unit 21, and a search unit 22. These units of functions on the communication terminal 10 are implemented by or caused to function by one or more of the components illustrated in FIG. 3 operating in accordance with instructions from the CPU 501 according to the information recording application 41 loaded from the HD 504 to the RAM 503. The communication terminal 10 further includes a storage unit 1000 implemented by, for example, the HD 504 illustrated in FIG. 3. The storage unit 1000 includes an information storage area 1001, which is implemented by a database.

The communication unit 11 transmits and receives various types of information to and from the information processing system 50 via a communication network.

For example, the communication unit 11 receives a list of teleconferences from the information processing system 50 and transmits an audio data recognition request to the information processing system 50.

The display control unit 13 control display of various screens serving as user interfaces in the information recording application 41 in accordance with screen transitions set in the information recording application 41. The operation reception unit 12 receives various operations input to the information recording application 41.

The app screen acquisition unit 14 acquires screen information displayed by an application selected by the user or screen information of a desktop screen from the OS or the like. When the application selected by the user is the teleconference application 42, the app screen acquisition unit 14 acquires a screen generated by the teleconference application 42 (an image including a captured image of a user of the communication terminal 10 captured by a camera of the communication terminal 10 at each site, a display image of a shared material, and participant icons, participant names, and the like). The screen information (application screen) displayed by the application is information displayed as a window by one or more applications (including the teleconference application) executed in the conference and acquired as an image by the information recording application. The window of the application is rendered into a region of the entire desktop screen and displayed on a monitor or the like. The screen information displayed by the application can be acquired by another application (e.g., the information recording application) as an image file or a moving image file formed of a plurality of consecutive images via an API of the OS or an API of the application displaying the screen. The screen information of the desktop screen is information including an image of the desktop screen generated by the OS, and is similarly acquirable as an image file or a moving image file via an API of the OS. The format of these image files is, for example, bitmap, Portable Network Graphics (PNG), or any other format. The format of the moving image file is, for example, MP4 or any other format.

The audio reception unit 15 acquires sound (including audio data received from the teleconference application 42 during the teleconference) output from a microphone or an earphone of the communication terminal 10. Even when the output of sound is muted, the audio reception unit 15 can receive the sound. The audio reception unit 15 can acquire audio data to be output by the communication terminal 10 via an API of the OS or an API of the app without a user intervention such as the selection of the teleconference application 42. Thus, the audio data received by the teleconference application 42 from the second site 101 is also acquired. When the teleconference application 42 is not being executed or a teleconference is not being held, the information recording application 41 may fail to acquire the audio data. The sound acquired by the audio reception unit 15 may be the audio data to be output, without including the sound collected by the communication terminal 10. This is because the meeting device 60 separately collects the sound at the site.

The device communication unit 16 communicates with the meeting device 60 using a USB cable or the like. Alternatively, the device communication unit 16 may use a wireless local area network (LAN) or BLUETOOTH to communicate with the meeting device 60. The device communication unit 16 receives a panoramic image and a talker image from the meeting device 60, and transmits the audio data acquired by the audio reception unit 15 to the meeting device 60. The device communication unit 16 receives the combined audio data received by the meeting device 60.

The video storing unit 17 stores, as an individual moving image (video), the panoramic image and the talker image received by the device communication unit 16 and the screen information displayed by the application, acquired by the app screen acquisition unit 14.

The video storing unit 17 separately stores the combined audio data. The video storing unit 17 may combine the audio data with the panoramic image to create a panoramic image with audio.

The audio data processing unit 18 requests the information processing system 50 to convert, into text data, the combined audio data received from the meeting device 60.

The video replay unit 19 displays (plays) a recorded video. The recorded video is stored in the communication terminal 10 during the recording and then uploaded to the information processing system 50.

After the teleconference ends, the upload unit 20 transmits the recorded video and the audio data to the information processing system 50.

The editing unit 21 edits (e.g., deletes a portion of the video or combines a plurality of videos) the recorded video in accordance with a user operation.

The search unit 22 searches the text data for a keyword input by a user. The time of utterance of a matched text retrieved, as a match with the search keyword, from the text data is indicated as the time elapsed from the start of the conference (start of the recording).

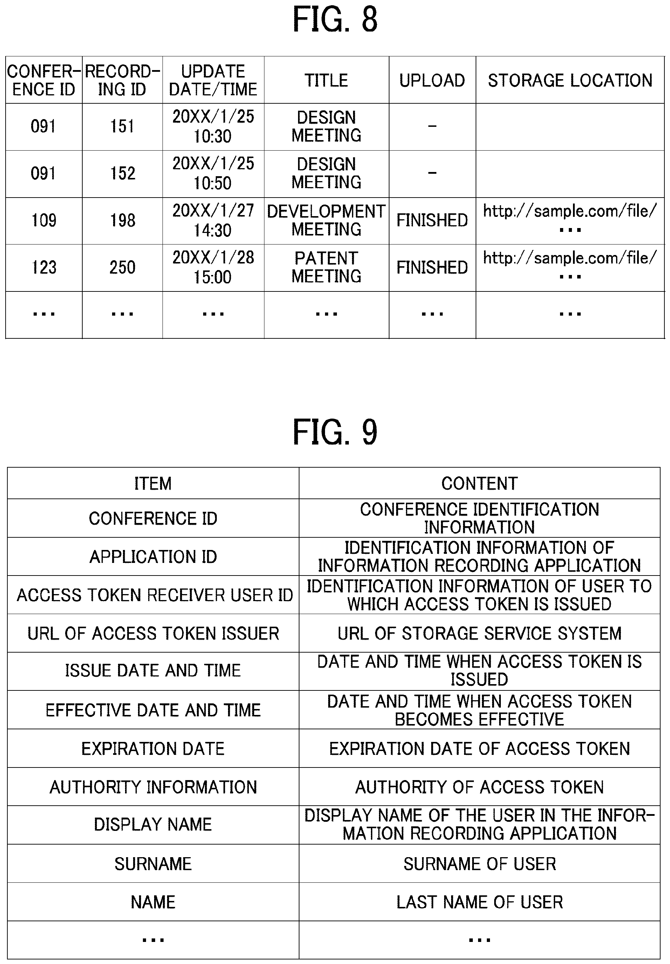

FIG. 8 is a table illustrating an example of items of information on the recorded video stored in the information storage area 1001 according to the present embodiment. The information on the recorded video includes items such as "conference ID," "recording ID," "update date/time," "title," "upload," and "storage location." When the user logs in to the information processing system 50, the information recording application 41 can download the conference information acquired by the information processing system 50 from the conference management system 9 as well as app-side conference information held by the information processing system 50. The conference ID or the like included in the conference information is reflected in the information on the recorded video. The information on the recorded video in FIG. 8 is stored by the communication terminal 10 operated by a certain user.

The item "conference ID" represents an identifier identifying a teleconference that has been held. The conference ID is assigned when a schedule of the teleconference is registered in the conference management system 9, or is assigned by the information processing system 50 in response to a request from the information recording application 41. The conference management system 9 is a system in which a schedule of a conference or a teleconference, a uniform resource locator (URL) such as a link for starting the teleconference, and reservation information of devices to be used in the conference or the teleconference are registered. In other words, the conference management system 9 is, for example, a scheduler to which the communication terminal 10 connects via a network. The conference management system 9 can transmit the registered schedule and the like to the information processing system 50.

The item "recording ID" represents an identifier identifying a video recorded in the teleconference. The recording ID is assigned by the meeting device 60. Alternatively, the recording ID may be assigned by the information recording application 41 or the information processing system 50. Different recording IDs are assigned to a same conference ID in a case where the recording is suspended in the middle of the teleconference but is started again for some reason.

The item "update date/time" represents the date and time when the recorded video is updated (or recording is ended). When the recorded video is edited, the update date and time is the date and time of editing.

The item "title" represents a name of the conference (or a teleconference). The title may be set when the conference is registered to the conference management system 9, or may be set by the user in any manner.

The item "upload" indicates whether a recorded video has been uploaded to the information processing system 50.

The item "storage location" indicates a location (a URL or a file path) where the recorded video and text data are stored in the storage service system 70. Thus, the user can view the recorded video uploaded to the information processing system 50 as desired. The panoramic image, the talker images, application screens, and the text data are stored with different file names starting with the URL, for example.

### Meeting Device

Referring back to FIG. 7, the description is continued. The meeting device 60 includes a terminal communication unit 61, a panoramic image generation unit 62, a talker image generation unit 63, a sound collection unit 64, and an audio synthesis unit 65. These functional units of the meeting device 60 are implemented by or caused to function by one or more of the components illustrated in FIG. 4 operating in accordance with instructions from the CPU 611 according to the control program loaded from the ROM 612 to the DRAM 614.

The terminal communication unit 61 communicates with the communication terminal 10 using a USB cable or the like. The terminal communication unit 61 may communicate with the communication terminal 10 via a wireless LAN, BLUETOOTH, or the like.

The panoramic image generation unit 62 generates a panoramic image. The talker image generation unit 63 generates a talker image. The method of generating a panoramic image and a speaker image has been described with reference to FIGS. 5A to 6.

The sound collection unit 64 converts a sound signal received by the microphone 608 of the meeting device 60 into (digital) sound data (or audio data). Thus, the contents of utterances made by the user and the participants at the site where the communication terminal 10 is installed is collected.

The audio synthesis unit 65 combines the audio data transmitted from the communication terminal 10 and the sound collected by the sound collection unit 64. Accordingly, the speeches uttered at the second site 101 and those uttered at the first site 102 are combined.

### Information Processing System

The information processing system 50 includes a communication unit 51, an authentication unit 52, a screen generation unit 53, a conference information acquisition unit 54, and a text conversion unit 55. These functional unit of the information processing system 50 are implemented by or caused to function by one or more of the components illustrated in FIG. 3 operating in accordance with instructions from the CPU 501 according to the control program loaded from the HD 504 to the RAM 503. The information processing system 50 further includes a storage unit 5000 implemented by, for example, the HD 504 illustrated in FIG. 3. The storage unit 5000 includes an app-side conference information storage area 5001 and a record information storage area 5002 each of which is implemented by a database, for example.

The communication unit 51 transmits and receives various kinds of information to and from the communication terminal 10. For example, the communication unit 51 transmits a list of teleconferences to the communication terminal 10 and receives an audio data recognition request from the communication terminal 10.

The authentication unit 52 authenticates a user who operates the communication terminal 10. The authentication unit 52 authenticates the user by, for example, determining whether authentication information (a user ID and a password) included in a request for authentication received by the communication unit 51 matches authentication information stored in advance. The authentication information may be a card number of an integrated circuit (IC) card, biometric authentication information of a face, a fingerprint, or the like. The authentication unit 52 may authenticate the user by using an external authentication system or an authentication method such as Open Authentication (OAuth).

The screen generation unit 53 generates screen information representing a screen to be displayed by the communication terminal 10. When the communication terminal 10 executes a native application, the communication terminal 10 stores the screen information and transmits the information to be displayed in a form of Extensible Markup Language (XML) or the like. In a case where the communication terminal 10 executes a web application, the screen information is generated in a format of hypertext markup language (HTML), XML, cascading style sheets (CSS), JAVASCRIPT, or the like.

The conference information acquisition unit 54 acquires the conference information from the conference management system 9 using an account of each user or a system account assigned by the information processing system 50. The conference information acquisition unit 54 can acquire a list of teleconferences for which a user belonging to the tenant has a viewing authority.

The viewing authority may be added directly from the information recording application 41 operating on the communication terminal 10 to the conference information managed by the conference information acquisition unit 54. The list of teleconferences for which the user belonging to the tenant has the viewing authority includes information on conferences set by the user and information on conferences for which another user has given the viewing authority to the user. Since the conference ID is set for a teleconference, the teleconference is associated with the record thereof by the conference ID.

The text conversion unit 55 uses an external speech recognition service to convert, into text data, audio data requested to be converted into text data by the communication terminal 10. In another example, the text conversion unit 55 performs this conversion.

FIG. 9 illustrates an example of the app-side conference information stored in the app-side conference information storage area 5001. The app-side conference information is information that the information recording application 41 generates and stores, separately from the conference information, when the information recording application 41 generates the record of the teleconference.

The item "conference ID" is information identifying a conference. The conference ID associates the conference information managed by the conference management system 9 with the app-side conference information.

The item "application ID" is identification information identifying the information recording application 41.

The item "user ID of access token receiver" is identification information identifying the user to which an access token is issued.

The item "URL of user ID of access token issuer" is the URL of the storage service system 70 that issues the access token.

The item "issue date and time" is a date and time when the access token is issued. The date and time of issuance is determined at the time of issuance.

The item "effective date and time" is a date and time when the access token becomes valid. The effective date and time is determined by the issuer.

The item "expiration date" is the expiration date of the access token. The expiration date is determined by the issuer.

The item "authority information" is authority of processing permitted to the user using the access token. The authority information is determined by the issuer.

The item "display name" is a display name of the user in the information recording application 41.

The item "surname" is the surname of the user.

The item "name" is the last name of the user.

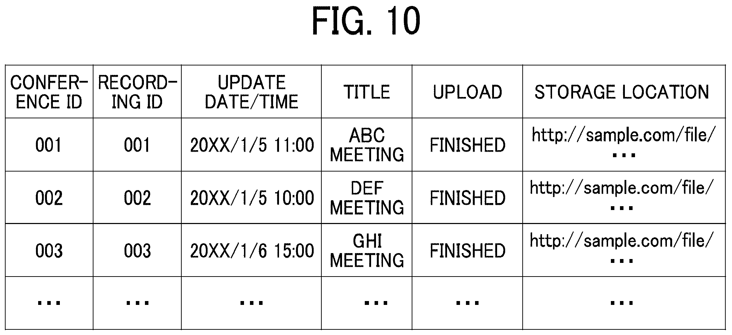

FIG. 10 is a table of the information on records stored in the record information storage area 5002. The information on the records includes a list of the videos recorded by all users belonging to one tenant. The information on the records includes items of "conference ID," "recording ID," "update date/time," "title," "upload," and "storage location." These items may be the same as those in FIG. 8. The user may input a desired storage location on a user setting screen of the information recording application 41 operating on the communication terminal 10, so that the storage location (a path such as a URL of a cloud storage system) is stored in the record information storage area 5002.

### Conference Management System

Referring back to FIG. 7, the description is continued. The conference management system 9 includes a conference information management unit 31. The functional units of the conference management system 9 are implemented by or caused to function by one or more of the components illustrated in FIG. 3 operating in accordance with instructions from the CPU 501 according to the control program loaded from the HD 504 to the RAM 503. The conference management system 9 further includes a storage unit 3000 implemented by, for example, the HD 504 illustrated in FIG. 3. The storage unit 3000 includes a conference information storage area 3001, which is implemented by a database.

The conference information management unit 31 manages conference information, that is, information on conferences to be held by the tenant. The conference information is stored in the conference information storage area 3001.

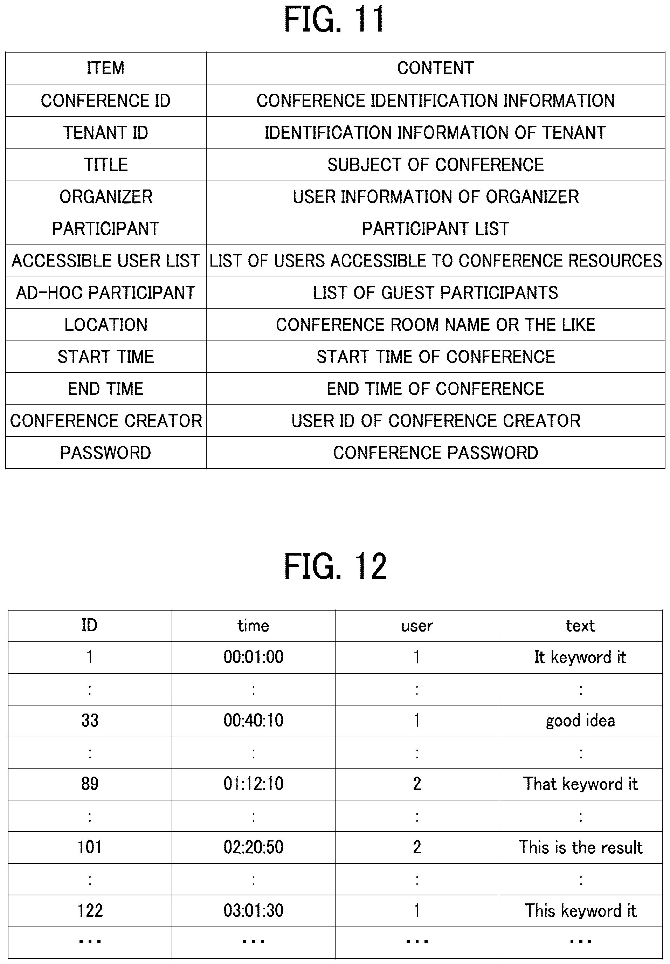

FIG. 11 illustrates an example of items of the conference information stored in the conference information storage area 3001. The conference information is managed by the conference ID and includes items presented in the FIG. 11.

The item "conference ID" is information identifying a conference.

The item "tenant ID" is the identification information identifying the tenant.

The item "title" is a name of the conference.

The item "organizer" is the organizer of the conference.

The item "participant" is a list of participants invited to the conference.

The item "accessible user list" is a list of users who can access the conference resource including the recorded video.

The item "ad-hoc participant" is a list of guest participants.

The item "location" is information on a conference room, such as the name of the conference room.

The item "start time" is a scheduled time at which the conference is to start.

The item "end time" is a scheduled time at which the conference is to end.

The item "conference creator" is an ID of a user who has registered the conference information.

The item "password" is a password for the participant to log in to the conference.

### Storage Service System

The storage service system 70 may be any service system that stores information. A description is given of a data structure of text data stored in the storage service system 70.

FIG. 12 is a diagram illustrating the structure of text data stored in the storage service system 70. As illustrated in FIG. 12, in the text data, items of "ID," "time," "user," and "text" are associated with each other, for example, in a database in a table format. The item "ID" is identification information that is assigned when text data is divided into units of "text," that is, multiple speeches (character strings), according to a predetermined rule. The predetermined rule is set in the speech recognition service system 80. For example, the rule specifies dividing the text data when a silence continues for a certain period of time, dividing the text data by elapse of a certain period regardless of presence of silence, or dividing the text data by units of sentence detected by morphological analysis. The item "time" is time information representing the utterance time of a specific "text" (speech) as a time elapsed from the start of the recording to the utterance. Since the so-called time of day is also recorded at the start of recording, the time (absolute time) of utterance of the character string being "text" is also known. The item "user" indicates whether the utterance is made at the first site (where the meeting device 60 is located) or another site, which is determined by sound pressure or the like. The item "text" is one or more character strings that is a part of the delimited text data divided according to the predetermined rule.

As described above, the "time" is associated with the "text." Accordingly, when the text data includes a specific text matching a search keyword, the information recording application 41 can display the video from the "time" (timing of the utterance represented as the elapsed time from the start of the recording) associated with the specific text in the data structure, for example, illustrated in FIG. 12.

### Screen Transition

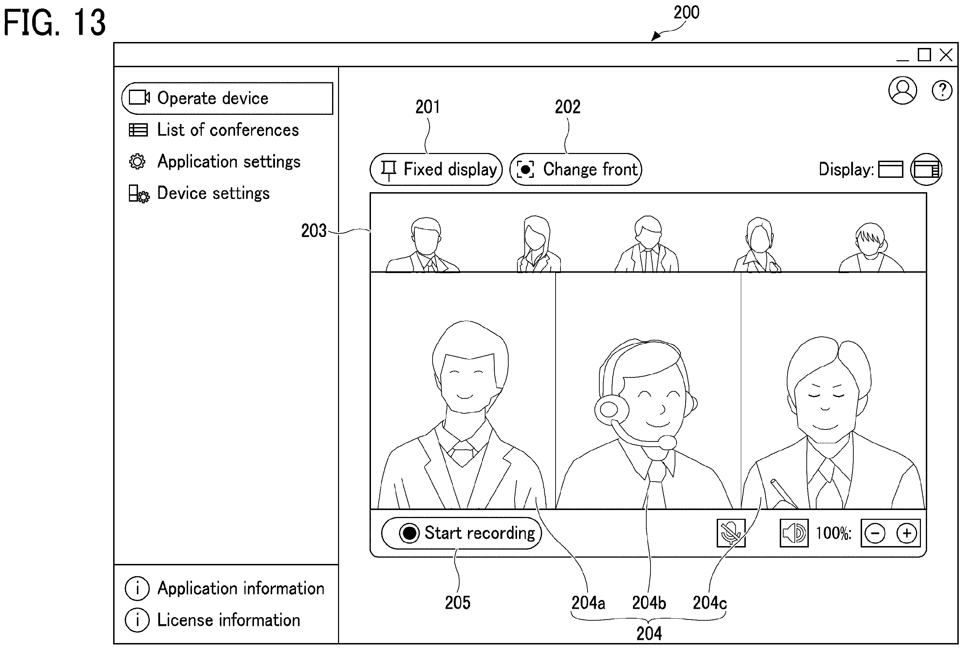

Descriptions are now given of several screens displayed by the communication terminal 10 in a teleconference, with reference to FIGS. 13 to 22. FIG. 13 is a diagram illustrating an example of an initial screen 200 displayed by the information recording application 41 operating on the communication terminal 10 after a login. The user of the communication terminal 10 connects to the information processing system 50 on the information recording application 41. The user inputs authentication information, and when the login is successful, the initial screen 200 of FIG. 13 is displayed.

The initial screen 200 includes a fixed display button 201, a change front button 202, the panoramic image 203, one or more talker images 204a to 204c, and a start recording button 205. In the following description, each of the talker images 204a to 204c may be simply referred to as a "talker image 204," when not distinguished from each other. In a case where the meeting device 60 has already been started and is capturing an image of the surroundings at the time of the login, the panoramic image 203 and the talker images 204 created by the meeting device 60 are displayed on the initial screen 200. This allows the user to decide whether to start recording while viewing the panoramic image 203 and the talker images 204. In a case where the meeting device 60 is not started (is not capturing any image), the panoramic image 203 and the talker images 204 are not displayed.

The information recording application 41 may display the talker images 204 of all participants based on all faces detected from the panoramic image 203, or may display the talker images 204 of certain number (N) of persons who have made an utterance most recently. In the example illustrated in FIG. 13, the talker images 204 of up to three persons are displayed. Display of the talker image 204 of a participant may be omitted until one of the participants makes an utterance (in this case, the number of the talker images 204 increases by one in response to an utterance). Alternatively, the talker images 204 of three participants in a predetermined direction may be displayed (the talker images 204 are switched in response to an utterance).

When no participant is speaking such as immediately after the meeting device 60 is turned on, an image of a predetermined direction (such as 0 degrees, 120 degrees, or 240 degrees) of 360 degrees in the horizontal direction is generated as the talker image 204. When fixed display (described later) is set, the setting of the fixed display is prioritized.

The fixed display button 201 is a button for the user to perform an operation of fixing a certain area of the panoramic image 203 as the talker image 204 in close-up.

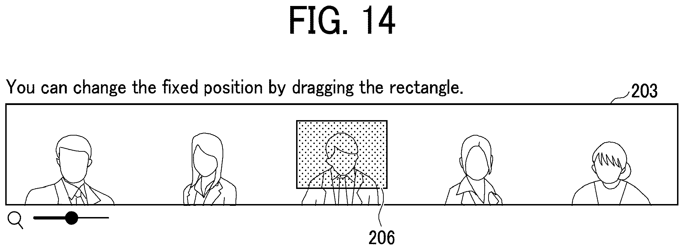

FIG. 14 is a diagram illustrating an operation to be performed when the fixed display button 201 is on. For example, the user moves a rectangular window 206 over the panoramic image 203 with a pointing device such as a mouse or a touch panel. The user overlays the window 206 on an image of, for example, the electronic whiteboard or a podium included in the panoramic image 203. The user's operation is transmitted to the meeting device 60. The meeting device 60 creates an image of the area selected with the window 206 from 360 degrees in the horizontal direction in the same size as the talker image 204 and transmits the created image to the communication terminal 10. This enables continuous display of, as the talker image 204, an object, such as a whiteboard other than a talker.

Referring back to FIG. 13, the change front button 202 is a button for the user to perform an operation of changing the front of the panoramic image 203. Since the panoramic image presents the 360-degree surroundings in the horizontal direction, the right end and the left end matches to the same direction. The user slides the panoramic image 203 leftward or rightward with a pointing device to set a particular participant to the front. The user's operation is transmitted to the meeting device 60. The meeting device 60 changes the angle set as the front in 360 degrees in the horizontal direction, creates the panoramic image 203, and transmits the panoramic image 203 to the communication terminal 10.

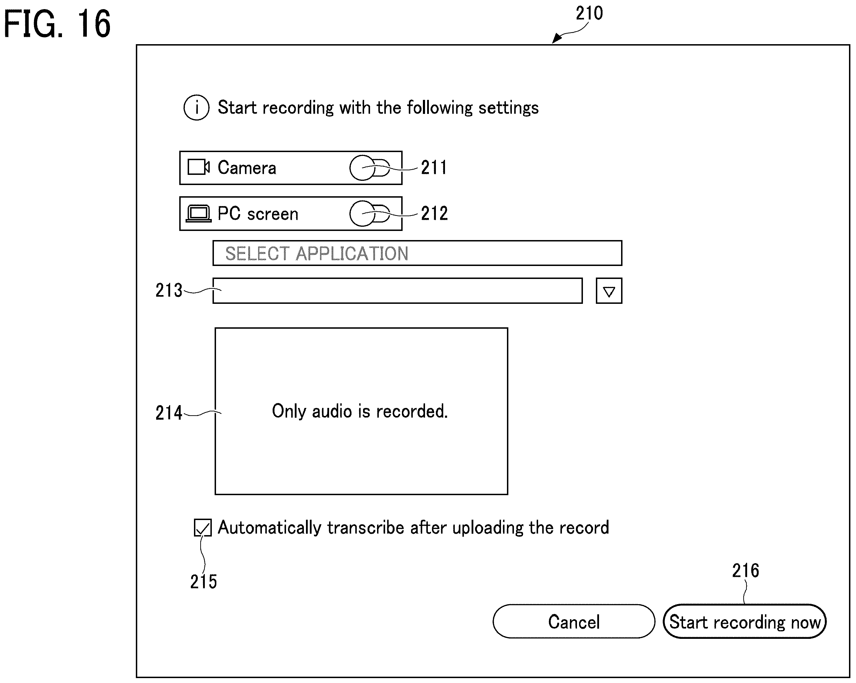

When the user presses the start recording button 205, the information recording application 41 displays a recording setting screen 210 illustrated in FIG. 16.

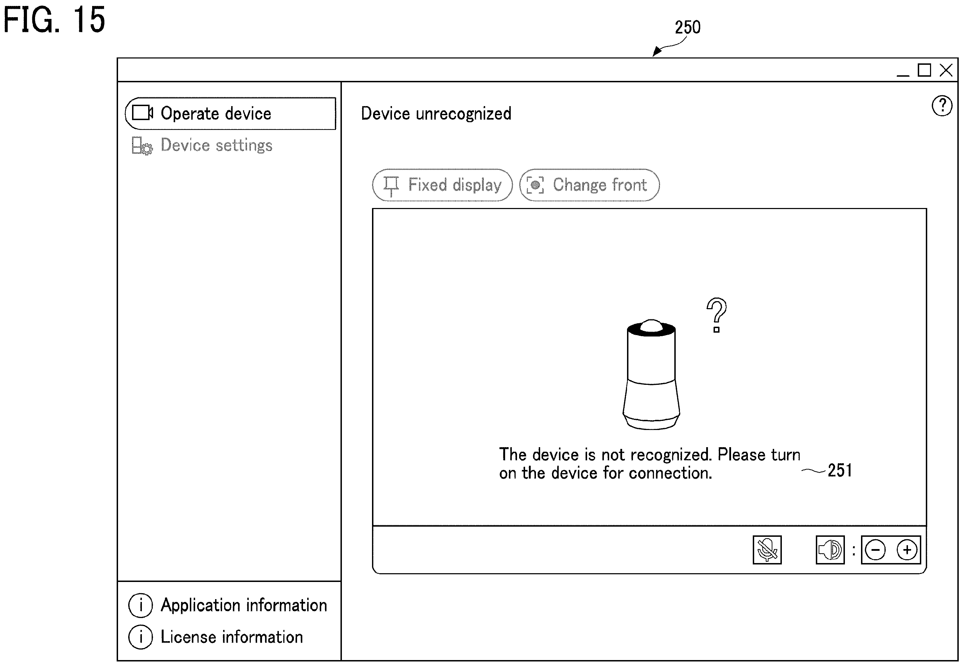

When the meeting device 60 is not connected or is not turned on at the time of activation of the information recording application 41, a device unrecognized screen 250 of FIG. 15 is displayed.

FIG. 15 illustrates an example of the device unrecognized screen 250. The device unrecognized screen 250 displays a message 251 stating "Device is not recognized. Please turn on the device for connection." The user viewing this message checks the power supply and the connection state of the meeting device 60.

FIG. 16 is a diagram illustrating an example of the recording setting screen 210 displayed by the information recording application 41. The recording setting screen 210 allows the user to set whether to record (whether to include in a recorded video) the panoramic image 203 and the talker images 204 created by the meeting device 60 and the desktop screen of the communication terminal 10 or the screen of the application operating on the communication terminal 10. In a case where the information recording application 41 is set to record none of the panoramic image, the talker image, and the desktop screen or the screen of the operating application, the information recording application 41 records only audio (audio output by the communication terminal 10 and audio collected by the meeting device 60).

A camera toggle button 211 is a button for switching on and off of recording of the panoramic image and the talker image generated by the meeting device 60. Alternatively, the camera toggle button 211 may allow settings for switching on and off of recording of the panoramic image and the talker image individually.

A PC screen toggle button 212 is a button for switching on and off of recording of the desktop screen of the communication terminal 10 or a screen of an application operating on the communication terminal 10. When the PC screen toggle button 212 is on, the desktop screen is recorded.

When the user desires to record the screen of the application, the user further selects the application in an application selection field 213. In the application selection field 213, names of applications operating on the communication terminal 10 are displayed in a pull-down format. Thus, the user can select an application to be recorded. The information recording application 41 acquires the names of the applications from the OS. The information recording application 41 can display names of applications that have a user interface (screen) among applications operating on the communication terminal 10. The teleconference application 42 may be included in the applications to be selected. Thus, the information recording application 41 can record materials displayed by the teleconference application 42 and participants at each site in a video. In addition, names of various applications operating on the communication terminal 10, such as a presentation application, a word processing application, a spreadsheet application, a document application for creating and editing a material, an electronic whiteboard application in a cloud service, and a web browser application, are displayed in the application selection field 213 in the pull-down format. Thus, the user can flexibly select a screen of an application to be included in the video (the record of the teleconference).

When recording is performed in units of applications, the user is allowed to select a plurality of applications. The information recording application 41 can record the screens of all the applications selected by the user.

When both the camera toggle button 211 and the PC screen toggle button 212 are set to off, a message "Only audio is recorded" is displayed in a recorded content confirmation window 214. The audio in this case includes audio output from the communication terminal 10 (audio received by the teleconference application 42 from the second site 101) and audio collected by the meeting device 60. In other words, when a teleconference is being held, the audio of the teleconference application 42 and the audio of the meeting device 60 are stored regardless of whether or not the images are recorded. The user settings may be set such that the user can selectively stop recording the audio of the teleconference application 42 and the audio of the meeting device 60.

In accordance with a combination of on and off of the camera toggle button 211 and the PC screen toggle button 212, the video is recorded in the following manner. Further, the video is displayed in real time in the recorded content confirmation window 214.

In a case where the camera toggle button 211 is on and the PC screen toggle button 212 is off, the panoramic image and the talker images captured by the meeting device 60 are displayed in the recorded content confirmation window 214.

In a case where the camera toggle button 211 is off and the PC screen toggle button 212 is on (and the screen has also been selected), the desktop screen or the screen of the selected application is displayed in the recorded content confirmation window 214.

In a case where the camera toggle button 211 is on and the PC screen toggle button 212 is on, the panoramic image and the talker images captured by the meeting device 60 and the desktop screen or the screen of the selected application are displayed side by side in the recorded content confirmation window 214.

Accordingly, there is a case where the panoramic image and the talker image or the screen of the application is not recorded or a case where none of the panoramic image, the talker image, and the screen of the application are recorded. However, in the present embodiment, for the sake of explanatory convenience, an image generated by the information recording application 41 is referred to as a video or a record of a teleconference.

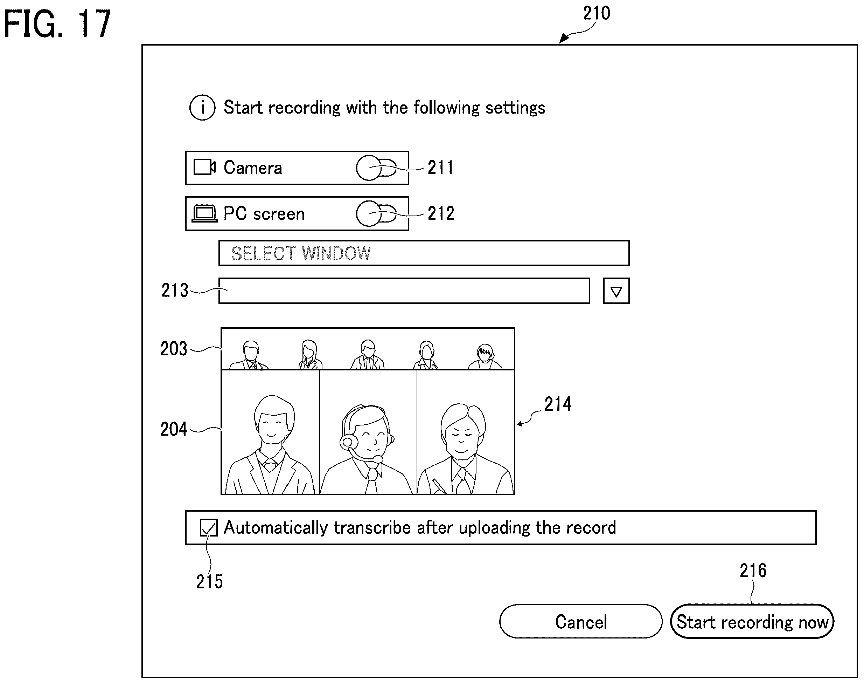

FIG. 17 is a diagram illustrating a display example of the recorded content confirmation window 214 when the camera toggle button 211 is on and the PC screen toggle button 212 is off. In FIG. 17, the panoramic image 203 and the talker image 204 are displayed in large size in the recorded content confirmation window 214.

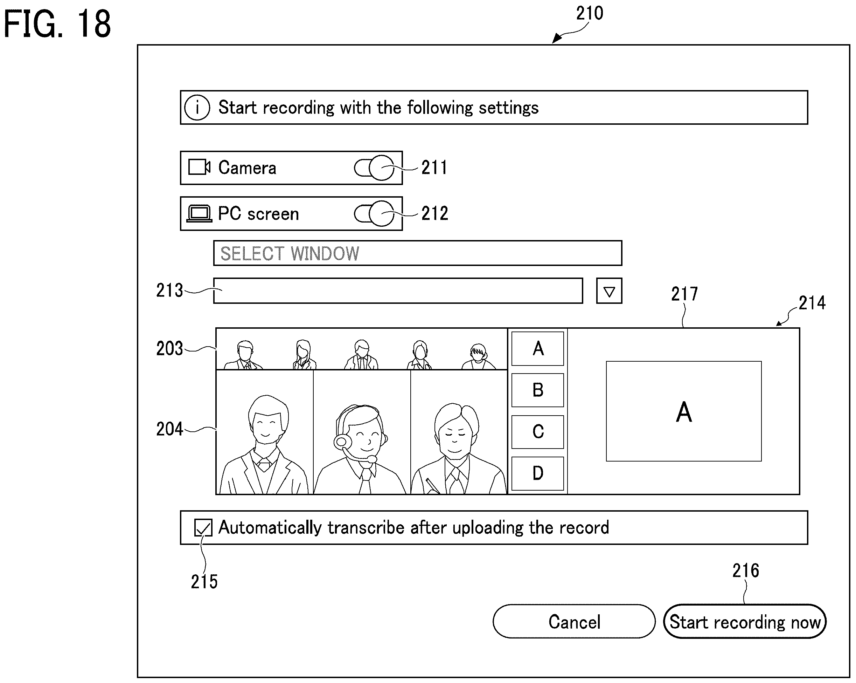

FIG. 18 illustrates a display example of the recorded content confirmation window 214 when the camera toggle button 211 is on and the PC screen toggle button 212 is on. In FIG. 18, the panoramic image 203 and the talker image 204 are displayed on the left side, and the application screen 217 is displayed on the right side in the recorded content confirmation window 214.

Therefore, the recorded content confirmation window 214 allows the user to confirm the content to be recorded (particularly, the image by the meeting device 60) in the video according to the setting on the recording setting screen 210 before starting the recording.

FIG. 18 is a display example of the video when only one application is selected, but when two or more applications are selected, the screens of the second and subsequent applications are sequentially connected to the right side. Alternatively, the screens of the second and subsequent applications may be arranged vertically and horizontally in two dimensions.

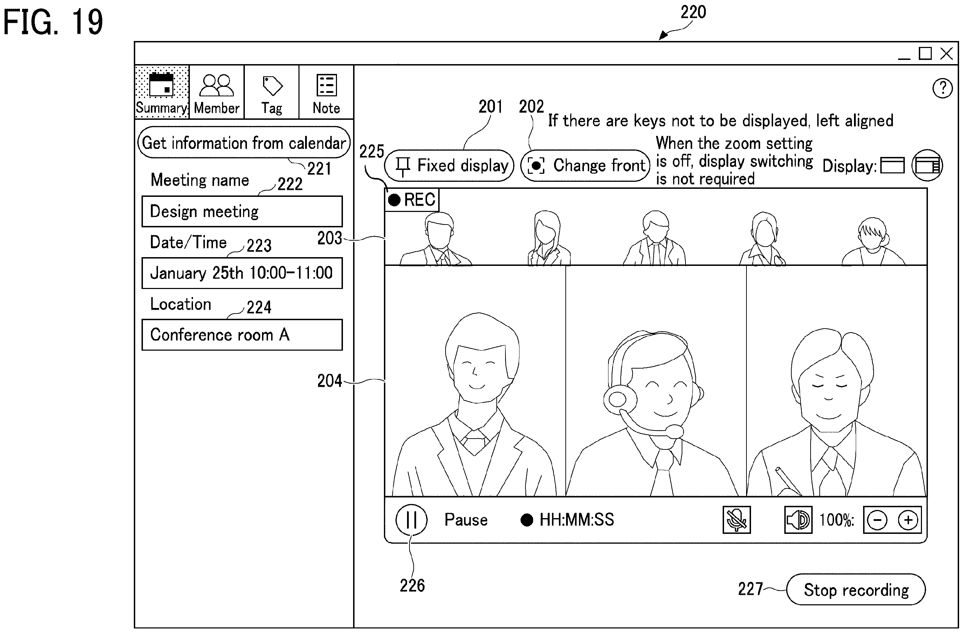

The description with reference to FIG. 16 is continued. The recording setting screen 210 further includes a check box 215 with a message "Automatically transcribe after uploading the record." The recording setting screen 210 further includes a button 216 labeled as "start recording now." If the user checks the check box 215, text data converted from utterances made during the teleconference is attached to the recorded video. In this case, after the end of recording, the information recording application 41 uploads audio data to the information processing system 50 together with a text data conversion request. When the user presses the button 216 labeled as "start recording now," a recording-in-progress screen 220 is displayed as illustrated in FIG. 19.

FIG. 19 is an example of the recording-in-progress screen 220 displayed by the information recording application 41 during recording. In the description referring to FIG. 19, for simplicity, mainly differences from FIG. 16 are described. The recording-in-progress screen 220 displays, in real time, the video recorded according to the conditions set by the user in the recording setting screen 210. The recording-in-progress screen 220 in FIG. 19 corresponds to the case where the camera toggle button 211 is on and the PC screen toggle button 212 is off, and displays the panoramic image 203 and the talker images 204 (both are moving images) created by the meeting device 60. The recording-in-progress screen 220 displays a recording icon 225, a pause button 226, and a recording end button 227.

When the user sets the PC screen toggle button 212 to ON, as illustrated in FIG. 18, the panoramic image and the talker image are displayed adjacent to the desktop screen and the screen of the application on the recording-in-progress screen 220.

The pause button 226 is a button for pausing the recording. The pause button 226 also receives an operation of resuming the recording after the recording is paused. The recording end button 227 is a button for ending the recording. The recording ID does not change when the pause button 226 is pressed, whereas the recording ID changes when the recording end button 227 is pressed. After pausing or temporarily stopping the recording, the user can set the recording conditions set on the recording setting screen 210 again before resuming the recording or starting recording again. In this case, the information recording application 41 may generate multiple video files each time the recording is stopped (e.g., when the recording end button 227 is pressed), or may consecutively connect the plurality of video files to generate a single video (e.g., when the pause button 226 is pressed). When the information recording application 41 replays the recorded video, the information recording application may replay the multiple video files sequentially as one video.

The recording-in-progress screen 220 includes a button 221 labeled as "get information from calendar," a conference name field 222, a time field 223, and a location field 224. The button 221 labeled as "get information from calendar" allows the user to acquire conference information from the conference management system 9. When the user presses the button 221 labeled as "get information from calendar", the information recording application 41 acquires a list of conferences for which the user has a viewing authority from the information processing system 50 and displays the acquired list of conferences. The user selects a teleconference to be held at that time from the list of conferences. The information recording application 41 can also acquire the app-side conference information. Consequently, the conference information is reflected in the conference name field 222, the time field 223, and the location field 224. The title, the start time and the end time, and the place included in the conference information are reflected in the conference name field 222, the time field 223, and the location field 224, respectively. In addition, the information on the teleconference in the conference management system 9 is associated with the record by the conference ID.

When the teleconference ends and the user ends the recording, a video with audio is generated.

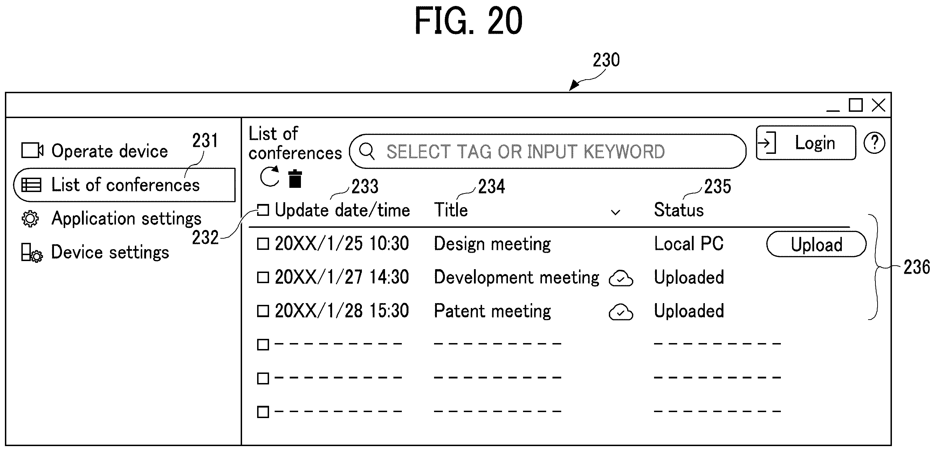

FIG. 20 is an example of a conference list screen 230 displayed by the information recording application 41. The conference list screen 230 presents a list of conferences, specifically, a list of the records (videos) recorded during teleconferences. The list of conferences includes conferences held in a certain conference room as well as teleconferences.

The conference list screen 230 presents the conference information for which the login user is authorized to view, stored in the conference information storage area 3001, the app-side conference information, and the information associated with the teleconference and stored in the record information storage area 5002 in an organized manner. The information on the recorded video stored in the information storage area 1001 may be further organized on the conference list screen 230.

The conference list screen 230 is displayed when the user selects a conference list tab 231 on the initial screen 200 of FIG. 13. The conference list screen 230 displays a list 236 of the videos (records) for which the user has the viewing authority. A person who schedules a conference (a person who creates minutes of the conference) can set the viewing authority for a participant of the conference. The list of conferences may be a list of stored records, a list of scheduled conferences, or a list of conference data.

The conference list screen 230 includes items of a check box 232, an update date/time 233, a title 234, and a status 235.

The check box 232 receives selection of a video file. The check box 232 is used when the user desires to collectively delete video files.

The update date/time 233 indicates a recording start time or a recording end time of the video. In a case where the video is edited, the update date/time 233 indicates the date and time of the editing.

The title 234 indicates the title (such as a subject) of the conference. The title may be transcribed from the conference information or set by the user.

The status 235 indicates whether the video has been uploaded to the information processing system 50. If the video has not been uploaded, "local PC" is displayed, whereas if the video has been uploaded, "uploaded" is displayed. In the case where the video has not been uploaded, an upload button is displayed. In a case where there is a video that has not yet been uploaded, it is desirable that the information recording application 41 automatically uploads the video when the user logs into the information processing system 50.

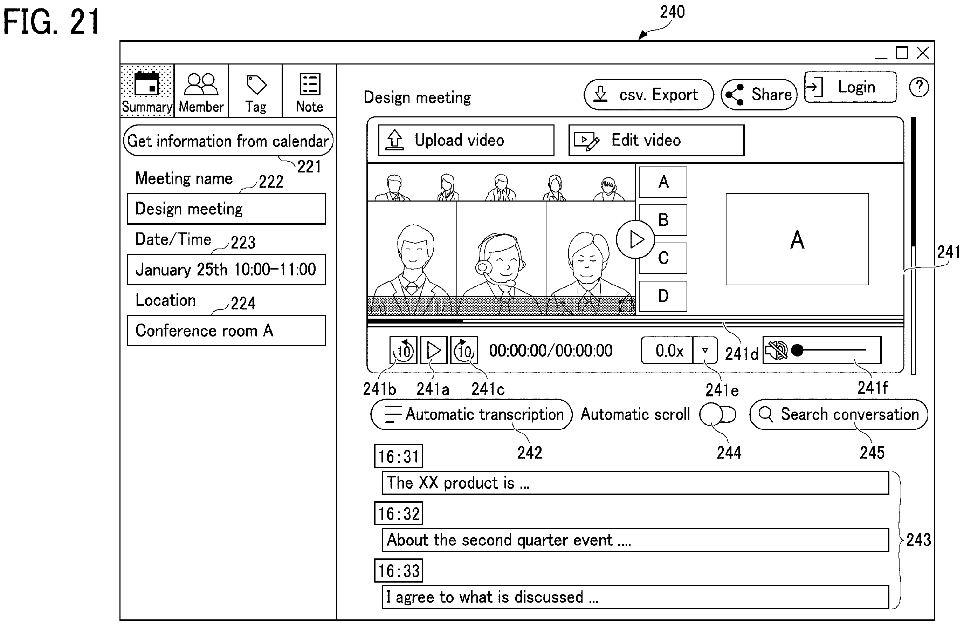

In response to selecting, for example, a desired title by the user from the list 236 of the videos with a pointing device, the information recording application 41 displays a video replay screen 240 (record replay screen) of FIG. 21. On the video replay screen 240, a recorded video can be displayed.

FIG. 21 is an example of the video replay screen 240 displayed by the information recording application 41 after the recorded video is selected. The video replay screen 240 includes a display field 241, a transcription button 242, one or more text display fields 243, an automatic scroll button 244, and a search button 245.

The display field 241 includes a replay button 241a, a rewind button 241b, a fast forward button 241c, a time indicator 241 d, a replay speed button 241 e, and a volume button 241f. The display field 241 displays a recorded video. In the video displayed in display field 241 of FIG. 21, the panoramic image and the talker image are on the left side, and the screen of the teleconference application 42 is on the right side. The screen of the teleconference application 42 transitions between an image representing the site and an image of a document during the teleconference. Thus, the user can view a screen of a desired scene by operating various buttons.

When the audio data of the video being displayed in the display field 241 has been converted into text data, a spoken content is displayed in text in the text display fields 243. Text data obtained by converting the combined audio data through speech recognition is displayed in the text display field 243.

The transcription button 242 is a button that allows the user to switch whether to display the text data in the text display fields 243 in corresponding to the display time of the video.

The automatic scroll button 244 is a button that allows the user to switch whether to automatically scroll the text data irrespective of the display time.

The search button 245 is a button that allows the user to designate a keyword and search the text data using a keyword. A detailed description thereof will be given later.

In the video replay screen 240, a recorded video may be downloaded.

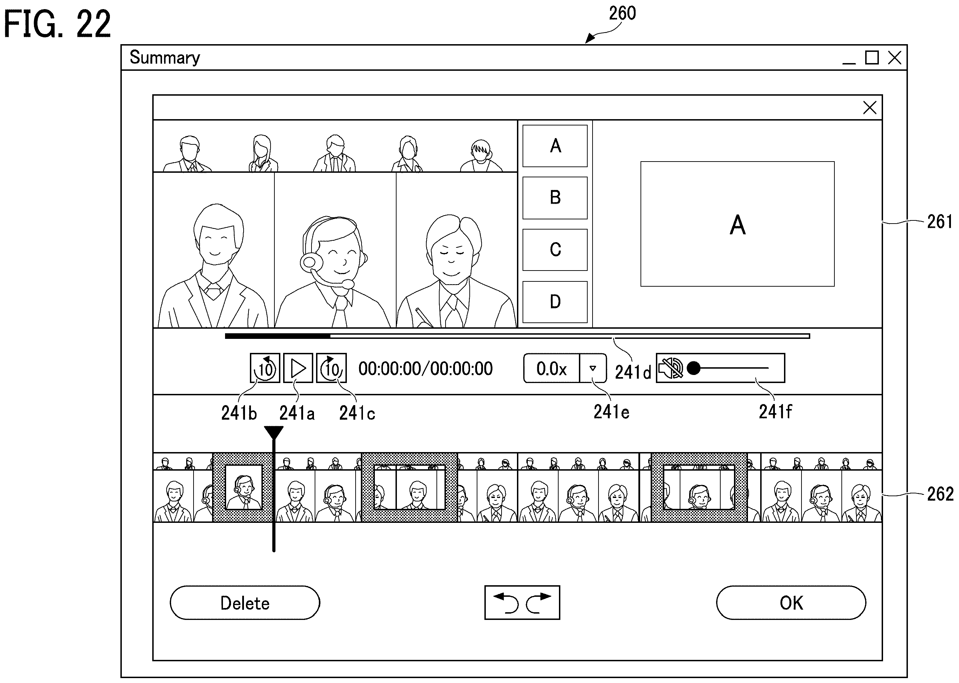

FIG. 22 is an example of an edit screen 260 for editing a video. The edit screen 260 transitions from the recording-in-progress screen 220 automatically or in response to a predetermined operation by the user on the video replay screen 240. The edit screen 260 has a first display field 261 and a second display field 262. A certain moment in the video being replayed is displayed in the first display field 261, and frames of the video are displayed in time series in the second display field 262. The user can select one or more frames to delete unwanted frames. The user can also extract a part of the frames and insert the part of the frames after a desired frame. The editing unit 21 edits the video in accordance with a user's operation, and overwrites the existing video with the edited video or stores the edited video separately.

### Procedure of Operation or Process

A description is now given of an operation and processes performed by the record display system 100 based on the configuration described above.

### Storage of Recorded Video

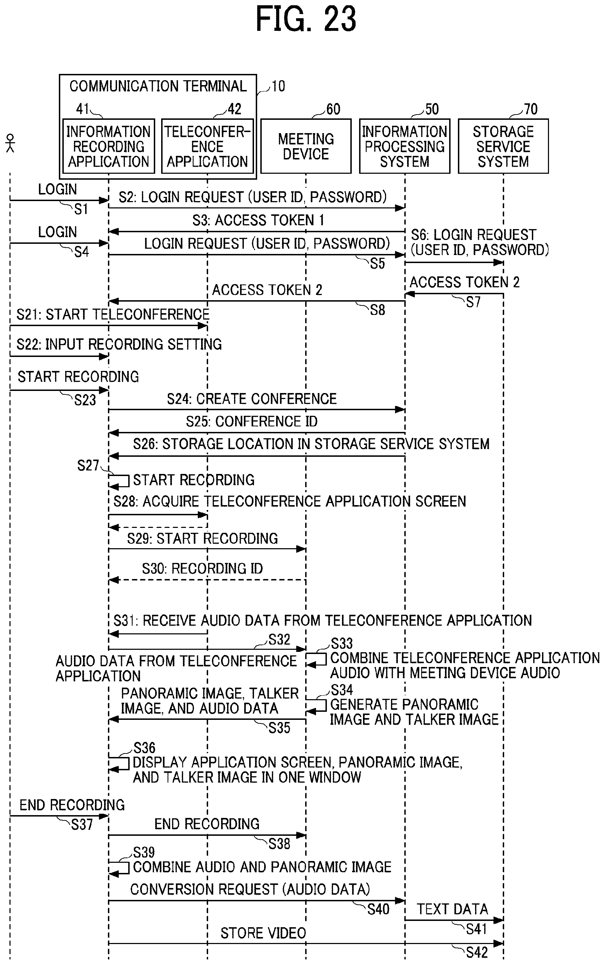

A description is now given of an operation of storing a video with reference to FIG. 23. FIG. 23 is a sequence chart illustrating an example of recording a panoramic image, a talker image, and an application screen by the information recording application 41.

S 1: The user of the communication terminal 10 activates the information recording application 41 and connects the communication terminal 10 (the information recording application 41) to the information processing system 50. If the access token has expired, the display control unit 13 displays the login screen. S6: The user inputs authentication information (e.g., user ID and a password) for logging into a tenant, to the information recording application 41. The operation reception unit 12, which is implemented by instructions from the CPU 501 operating according to the information recording application 41, receives the input.

S2: The communication unit 11 implemented by the information recording application 41 transmits, to the information processing system 50, a login request with designation of the authentication information.

S3: The communication unit 51 of the information processing system 50 receives the login request, and the authentication unit 52 authenticates the user on the basis of the authentication information. The following description of the present embodiment is given on the assumption that the authentication is successful. The communication unit 51 of the information processing system 50 transmits an access token 1 to the information recording application 41. The communication unit 51 attaches the access token 1 to the subsequent communication with the information processing system 50. The access token 1 is associated with the authority of the user who has logged in.

S4: The user also logs into the storage service system 70 in a similar manner since the record (recorded video) is stored in the storage service system 70. The user inputs authentication information (e.g., user ID and a password) for logging into the storage service system 70. The operation reception unit 12, which is implemented by instructions from the CPU 501 operating according to the information recording application 41, receives the input.

S5: The communication unit 11 implemented by the information recording application 41 transmits, to the information processing system 50, a login request with designation of the authentication information.

S6: The communication unit 51 of the information processing system 50 receives the login request and transfers the login request to the storage service system 70 because the login request is for logging into the storage service system 70.

S7: The storage service system 70 authenticates the user based on the authentication information. The following description of the present embodiment is given on the assumption that the authentication is successful. The storage service system 70 transmits an access token 2 to the information processing system 50.

S8: The communication unit 51 of the information processing system 50 receives the access token 2 and transmits the access token 2 to the information recording application 41. The communication unit 51 attaches the access token 2 to the subsequent communication with the storage service system 70. The access token 2 is associated with the authority of the user who has logged in.

S21: The user operates the teleconference application 42 to start the teleconference. In this example, it is assumed that the teleconference is started between the teleconference application 42 of the first site 102 and the teleconference application 42 of the second site 101. The teleconference application 42 of the first site 102 transmits an image captured by the camera of the communication terminal 10 and audio collected by the microphone of the communication terminal 10 to the teleconference application 42 of the second site 101. The teleconference application 42 of the second site 101 displays the received image on the display and outputs the received audio from the speaker. In substantially the same manner, the teleconference application 42 of the second site 101 transmits an image captured by the camera of the communication terminal 10 and audio collected by the microphone of the communication terminal 10 to the teleconference application 42 of the first site 102. The teleconference application 42 of the first site 102 displays the received image on the display and outputs the received audio from the speaker. Each teleconference application 42 repeats these processes to implement the teleconference.

S22: The user inputs settings relating to recording on the recording setting screen 210 illustrated in FIG. 16, provided by the information recording application 41. The operation reception unit 12 implemented by the information recording application 41 receives the settings. In this example, a description is given on the assumption that both the camera toggle button 211 and the PC screen toggle button 212 are set to on.

In a case that the user has reserved a teleconference in advance, a list of teleconferences is displayed in response to pressing of the button 221 labeled as "get information from calendar" illustrated in FIGS. 19 and 21 by the user. The user selects a desired teleconference to be associated with the recorded video. Since the user has already logged into the information processing system 50, the information processing system 50 identifies teleconferences for which the user who has logged in has the viewing authority. Since the information processing system 50 transmits the list of the identified teleconferences to the communication terminal 10, the user selects a teleconference that is being held or to be held in the future. Thus, information on the teleconference such as the conference ID is determined.

Further, even in a case that the user does not reserve a teleconference in advance, the user can create a conference when creating a video. In the example described below, the information recording application 41 creates a conference when creating a video and acquires a conference ID from the information processing system 50.

S23: The user instructs the information recording application 41 to start recording. For example, the user presses the button 216 labeled as "start recording now." The operation reception unit 12 implemented by the information recording application 41 receives the instruction. The display control unit 13 displays the recording-in-progress screen 220.

S24: Since no teleconference is selected (in other words, no conference ID is determined), the communication unit 11 implemented by the information recording application 41 transmits a teleconference creation request to the information processing system 50.

S25: In response to receiving the teleconference creation request by the communication unit 51 of the information processing system 50, the conference information acquisition unit 54 acquires a unique conference ID assigned by the conference management system 9. The communication unit 51 transmits the conference ID to the information recording application 41.

S26: Further, the conference information acquisition unit 54 transmits a storage location (an URL of the storage service system 70) in which the video file is to be stored to the information recording application 41 via the communication unit 51.

S27: When the communication unit 11 implemented by the information recording application 41 receives the conference ID and the storage location of the video file, the video storing unit 17 determines that preparation for recording is completed and starts recording.

S28: The app screen acquisition unit 14 implemented by the information recording application 41 sends, to an application selected by the user, a request of a screen of the selected application. More specifically, the app screen acquisition unit 14 acquires the screen of the application via the OS. The description given with reference to FIG. 23 is on the assumption that the user selects the teleconference application 42.

S29: The video storing unit 17 implemented by the information recording application 41 notifies the meeting device 60 of the start of recording via the device communication unit 16. With the notification, the video storing unit 17 preferably sends information indicating that the camera toggle button 211 is on (a request for a panoramic image and a talker image). The meeting device 60 transmits the panoramic image and the talker image to the information recording application 41 regardless of the presence or absence of the request.

S30: In response to receiving the notification of the start of recording by the terminal communication unit 61 of the meeting device 60, a unique recording ID is assigned. The terminal communication unit 61 transmits the assigned recording ID to the information recording application 41. In one example, the information recording application 41 assigns the recording ID. In another example, the recording ID is acquired from the information processing system 50.

S31: The audio reception unit 15 implemented by the information recording application 41 acquires audio data output by the communication terminal 10 (audio data received by the teleconference application 42).

S32: The device communication unit 16 transmits the audio data acquired by the audio reception unit 15 and a combining request of audio to the meeting device 60.

S33: In response to receiving the audio data and the combining request by the terminal communication unit 61 of the meeting device 60, the audio synthesis unit 65 combines (synthesizes) the received audio data with the audio of the surroundings collected by the sound collection unit 64. For example, the audio synthesis unit 65 adds the two audio data items together. Since clear audio around the meeting device 60 is recorded, the accuracy of text conversion of audio especially around the meeting device 60 (in the conference room) increases.

The communication terminal 10 is also capable of performing the audio synthesis. However, by distributing the recording function to the communication terminal 10 and the audio processing to the meeting device 60, load on each of the communication terminal 10 and the meeting device 60 is reduced. Alternatively, the recording function may be distributed to the meeting device 60, and the audio processing may be distributed to the communication terminal 10.

S34: Further, the panoramic image generation unit 62 of the meeting device 60 generates a panoramic image, and the talker image generation unit 63 generates a talker image.

S35: The device communication unit 16 of the information recording application 41 repeatedly acquires the panoramic image and the talker image from the meeting device 60. Further, the device communication unit 16 repeatedly requests the meeting device 60 for the synthesized audio data to acquire the synthesized audio data. The device communication unit 16 may send a request to the meeting device 60 to acquire such images and data. Alternatively, the meeting device 60 that has received information that the camera toggle button 211 is on may automatically transmit the panoramic image and the talker image. The meeting device 60 that has received the combining request of audio may automatically transmit the synthesized audio data to the information recording application 41.

S36: The display control unit 13 implemented by the information recording application 41 displays the application screen, the panoramic image, and the talker image side by side on the recording-in-progress screen 220. The video storing unit 17 implemented by the information recording application 41 stores the application screen, the panoramic image, and the talker image acquired from the teleconference application 42 as different videos. In other words, the video storing unit 17 designates the application screen, panoramic image, and the talker image that are repeatedly received to the frames constituting the video, so as to create each video. Further, the video storing unit 17 stores the audio data received from the meeting device 60.

The information recording application 41 repeats the above steps S31 to S36.

S37: When the teleconference ends and the recording is no longer necessary, the user instructs the information recording application 41 to end the recording. For example, the user presses the recording end button 227. The operation reception unit 12 implemented by the information recording application 41 receives the instruction.

S38: The device communication unit 16 implemented by the information recording application 41 notifies the meeting device 60 of the end of recording. The meeting device 60 continues the generation of the panoramic image and the talker image and the synthesis of the audio. The meeting device 60 may change the processing load by, for example, changing the resolution or frames per second depending on whether or not recording is being performed.

S39: The video storing unit 17 implemented by the information recording application 41 combines the video with the audio data, to create the video combined with audio. If no recorded video is stored, the audio data may be independent. There are three types of recorded videos, i.e., an application screen video, a panoramic video, and a talker video.
One of these videos to which the audio data is combined is determined in advance with the priority order. In addition, the video and the audio data may not necessarily be combined.

S40: Further, in a case that the user puts a mark in the check box 215 labeled as "automatically transcribe after uploading the record" on the recording setting screen 210, the audio data processing unit 18 requests the information processing system 50 to convert the audio data into text data.

Specifically, the audio data processing unit 18 transmits, to the information processing system 50 via the communication unit 11, a conversion request of the audio data combined to the video, the conference ID, the recording ID, with designation of the URL of the storage location.

S41: The communication unit 51 of the information processing system 50 receives the conversion request for converting the audio data, and the text conversion unit 55 converts the audio data into text data using the speech recognition service system 80. The communication unit 51 stores the text data in the same storage location (the URL of the storage service system 70) as the storage location of the video. The text data is associated with the video by the conference ID and the recording ID in the record information storage area 5002. In another example, the text data may be managed by the conference information acquisition unit 54 of the information processing system 50 and stored in the storage unit 5000. In another example, the communication terminal 10 may request the speech recognition service system 80 to perform speech recognition, and may store text data received from the speech recognition service system 80 in the storage location. In the example above, the speech recognition service system 80 returns the converted text data to the information processing system 50. In another example, the speech recognition service system 80 directly transmits the text data to the URL of the storage location. The speech recognition service system 80 may be selected or switched among multiple services according to the user settings in the information processing system 50.

S42: The upload unit 20 implemented by the information recording application 41 stores the video (record of teleconference) in the designated storage location via the communication unit 11. In the record information storage area 5002, the video is associated with the conference ID and the recording ID. Having been uploaded is recorded in the video.

Since the user is notified of the storage location, the user can share the video with other participants by sending the storage location via e-mail or the like. Even when the video, the audio data, and the text data are created by different devices or apparatuses, these data are stored in one storage location, so that the user can view the collected image or data later in a simple manner.

In the case of real-time speech recognition, the meeting device 60 or the communication terminal 10 transmits audio data to the information processing system 50 in real time. The communication terminal 10 displays the text data transmitted from the meeting device 60 or returned from the information processing system 50 on the recording-in-progress screen 220 and stores the text data.

The process from steps S31 to S36 does not have to be performed in the order presented in FIG. 23. For example, the order of the audio data synthesis and the storing of the video may be switched.

### Display of Recorded video

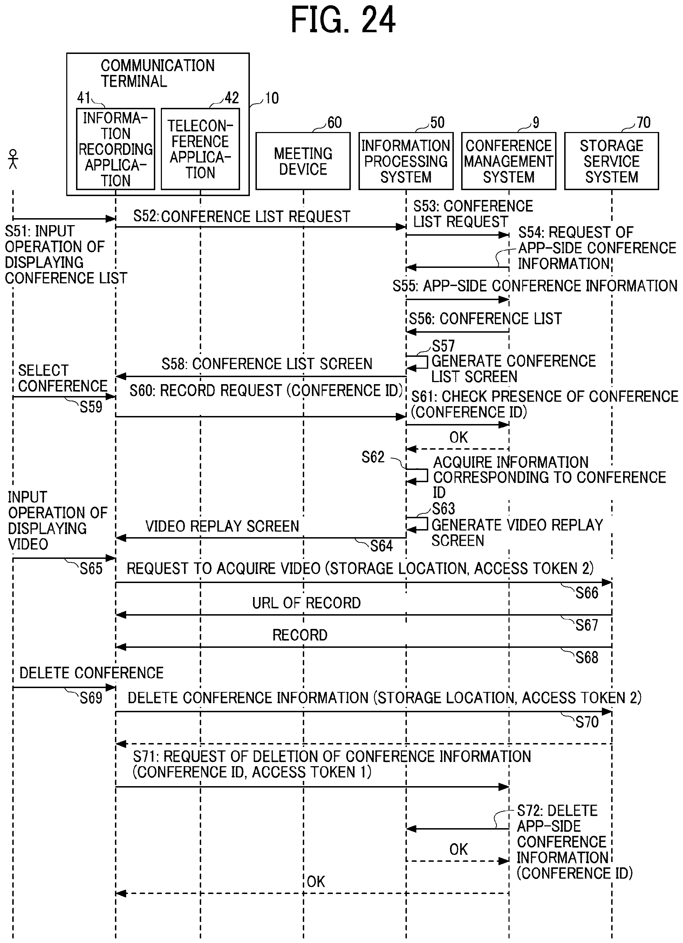

Next, with reference to FIG. 24, display (replay) of the video stored in the storage service system 70 will be described with reference to FIG. 24. FIG. 24 is a sequence diagram illustrating an example of a process in which the information recording application 41 downloads and displays a recorded video.

S51: A user who wants to replay a recorded video inputs an operation of displaying the conference list screen 230 (FIG. 20) on the information recording application 41. For that, the user has selected the conference list tab 231 on the initial screen 200 of FIG. 13. The operation reception unit 12 implemented by the information recording application 41 receives the selection.

S52: The communication unit 11 implemented by the information recording application 41 designates the access token 1 and transmits the conference list request to the information processing system 50.

S53: The communication unit 51 of the information processing system 50 receives the conference list request, and the conference information acquisition unit 54 transmits the conference list request to the conference management system 9.

S54, S55: The conference information management unit 31 of the conference management system 9 specifies conference information for which the user of the access token 1 has the viewing authority. Further, the conference information management unit 31 acquires, from the information processing system 50, the app-side conference information associated with the specified conference information by the conference ID.

S56: The conference information management unit 31 organizes the conference information stored by the conference management system 9 and the app-side conference information. The conference management system 9 transmits the organized conference list to the information processing system 50. This organizing may be performed by the information processing system 50.

S57: The communication unit 51 of the information processing system 50 receives the conference list, and the screen generation unit 53 generates the conference list screen 230.

S58: The communication unit 51 of the information processing system 50 transmits the screen information of the conference list screen 230 to the information recording application 41. The communication unit 11 implemented by the information recording application 41 receives the screen information of the conference list screen 230, and the display control unit 13 displays the conference list screen 230 on the display.

S59: The user selects the conference corresponding to video to be displayed. The operation reception unit 12 implemented by the information recording application 41 receives the selection (the conference ID is specified).

S60: The communication unit 11 implemented by the information recording application 41 transmits a request for the record, to the information processing system 50, with designation of the conference ID.

S61: The communication unit 51 of the information processing system 50 receives the request for the record. First, the conference information acquisition unit 54 checks the presence of the conference in the conference management system 9. It is assumed that the conference is present. Note that this check may be omitted.

S62: Since a conference is present, the screen generation unit 53 acquires the information on the record (the conference ID, the recording ID, update date and time, title, storage location, and the like) associated with the conference ID from the record information storage area 5002.

S63: The screen generation unit 53 generates the video replay screen 240 using the information on the record. In this step, since the video has not been acquired yet, the display field 241 may be a blank, or the title of the record may be displayed. If a thumbnail image of the video is stored in the record information storage area 5002, the thumbnail image may be displayed in the display field 241.

S64: The communication unit 51 of the information processing system 50 transmits the screen information of the video replay screen 240 to the information recording application 41. The communication unit 11 implemented by the information recording application 41 receives the screen information of the video replay screen 240, and the display control unit 13 displays the video replay screen 240.

S65: The user inputs an operation of starting replay of the video (the replay button 241a is turned on). The operation reception unit 12 implemented by the information recording application 41 receives the operation.

S66: The communication unit 11 implemented by the information recording application 41 designates the access token 2 and accesses the storage location in the information storage area 1001.

S67: The storage service system 70 returns, to the information recording application 41, a URL of the storage location of the record (the video and the text data).

S68: The communication unit 11 implemented by the information recording application 41 receives the URL and connects to the storage location, to download the record. The video replay unit 19 displays the recorded video on the video replay screen 240 and displays the text data corresponding to the recorded video.

S69: Further, the user can delete the conference information from the information recording application 41. The user selects the conference to be deleted, on the conference list screen 230 (see FIG. 20). The operation reception unit 12 implemented by the information recording application 41 receives the operation (the conference ID is specified).

S70: The communication unit 11 implemented by the information recording application 41 connects to the storage location of the storage service system 70, designating the access token 2, and deletes the record. The storage location is stored in the information storage area 1001.

S71: The communication unit 11 implemented by the information recording application 41 connects to the conference management system 9, using the access token 1, and transmits a conference information deletion request, specifying the conference ID.

S72: The conference management system 9 receives the deletion request. The conference information management unit 31 deletes the conference information specified by the conference ID and the app-side conference information.

### Details of Recorded Video Display

As described above, the record may include:
a. a panoramic image;
b. one or more talker images;
c. one or more application screens; and
d. text data.

The audio data is combined with any one of a to c. The items a to c may be absent depending on the recording setting made by the user. The item d may also be absent if audio data is not converted into text data. When the record includes the items a to c, the user can switch the content to be displayed on the video replay screen 240 to one or more contents selected from the items a to c each of which is in the form of video (moving image).

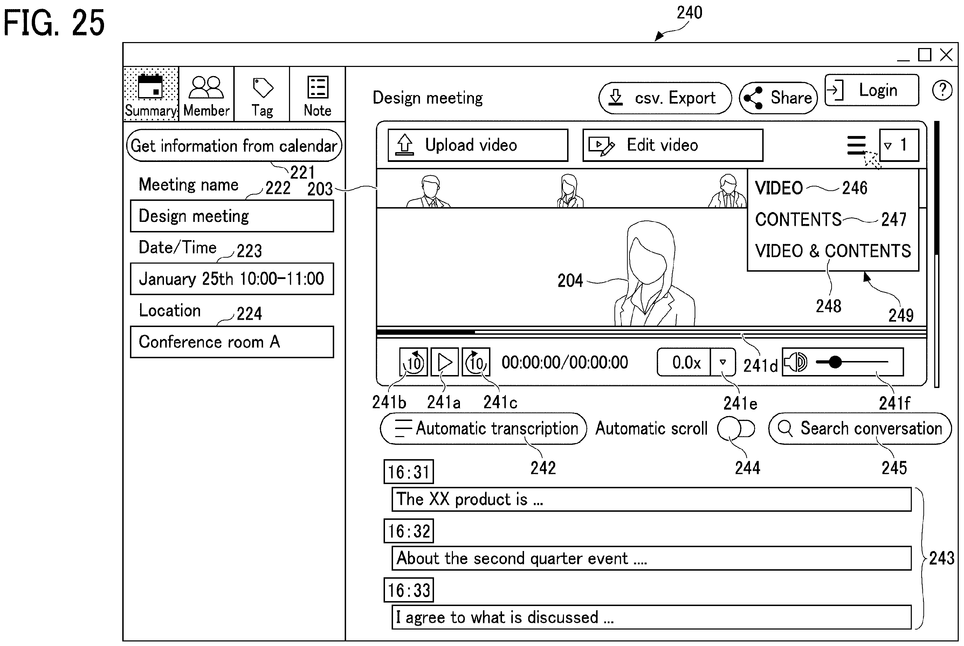

FIG. 25 is a diagram of an example of the video replay screen 240 on which the panoramic image 203 and the talker image 204 are displayed. In the description referring to FIG. 25, for simplicity, mainly differences from FIG. 21 are described. The video replay screen 240 includes a video selection menu 249. The video selection menu 249 includes a video button 246, a content button 247, and a video & content button 248. The video button 246 is a button for displaying a panoramic image and a talker image, the content button 247 is a button for displaying an application screen, and the video & content button 248 is a button for displaying the talker image and the application screen.

In FIG. 25, the video button 246 is pressed, and the panoramic image 203 and the talker image 204 are displayed in the display field 241.

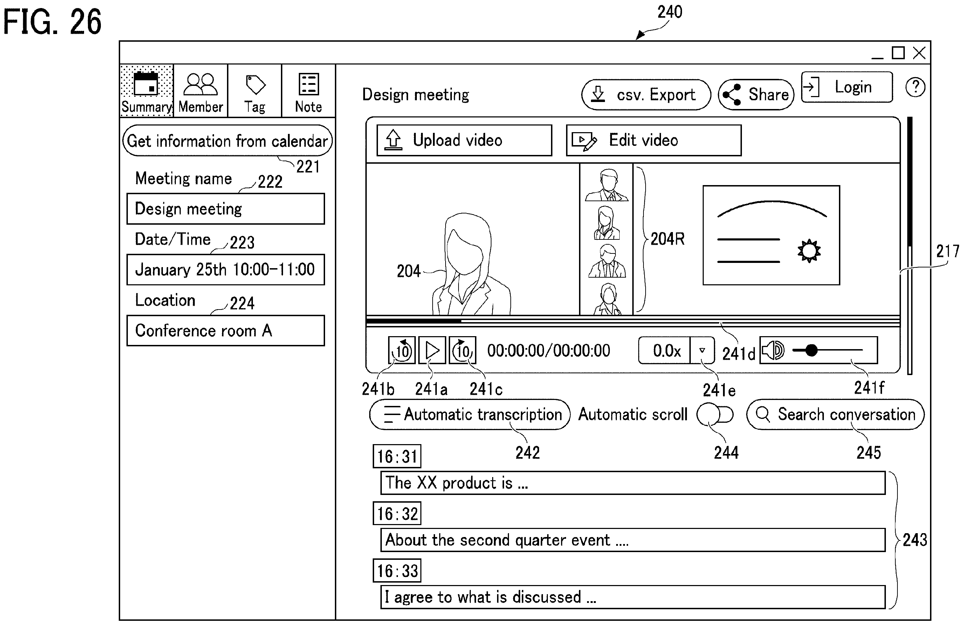

FIG. 26 is a diagram of the video replay screen 240 in which the video & content button 248 is pressed and the talker image 204 and the application screen 217 are displayed. In the display field 241, the talker image 204 and the application screen 217 are displayed.
In a region 204R, images of the talkers are vertically arranged. Although the panoramic image is not displayed, the panoramic image may also be displayed.

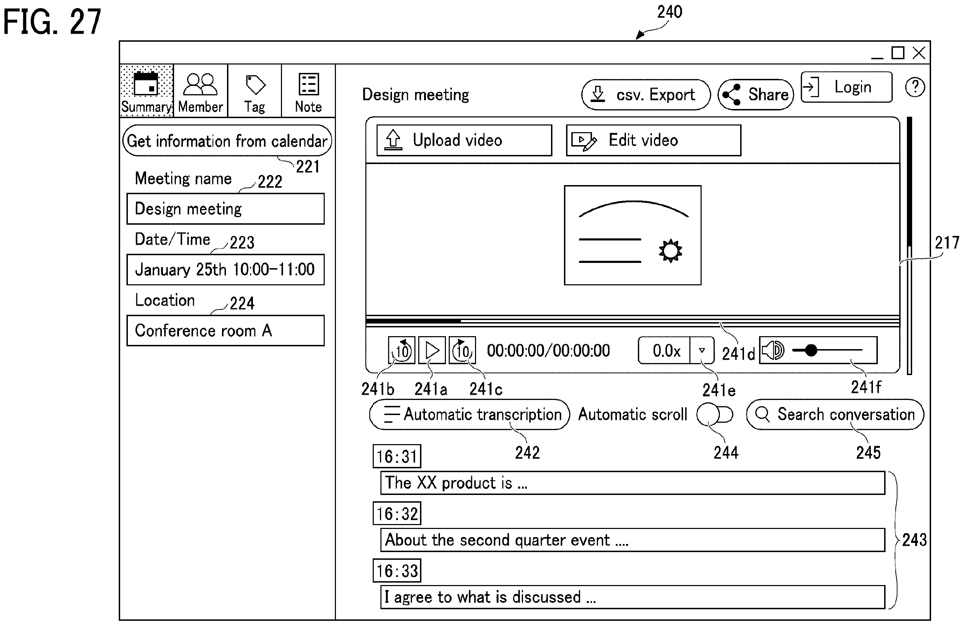

FIG. 27 is a diagram of the video replay screen 240 in which the content button 247 is pressed and the application screen 217 is displayed. The application screen 217 is displayed in the display field 241.

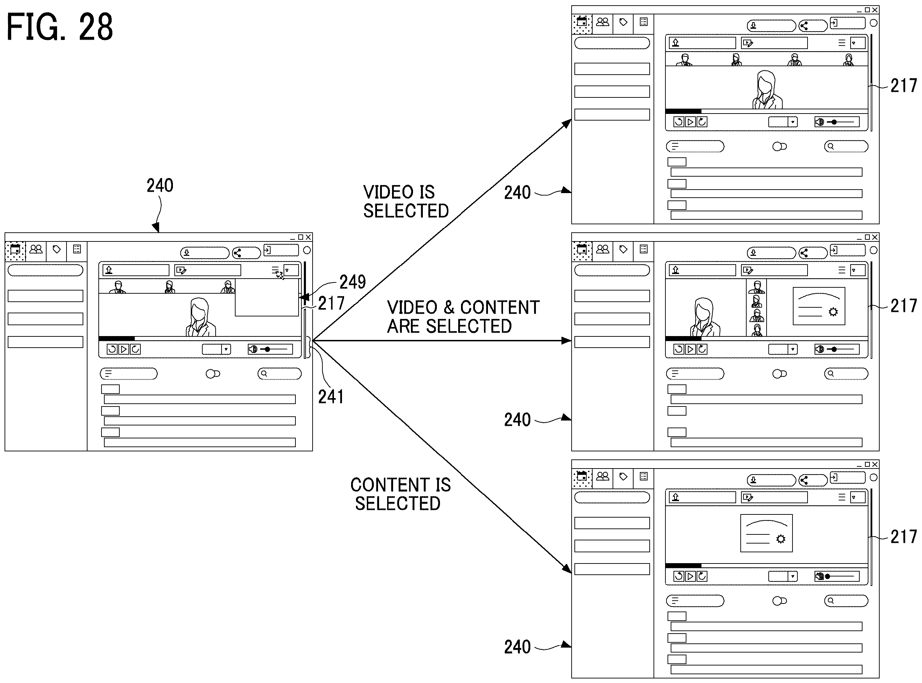

FIG. 28 is a diagram illustrating switching of the video (e.g., among the items a to c) displayed in the display field 241 in response to an operation on the video selection menu 249. As illustrated in FIG. 28, the user can switch the video to be displayed, by operating the video selection menu 249.

### Switching of Item to be Displayed

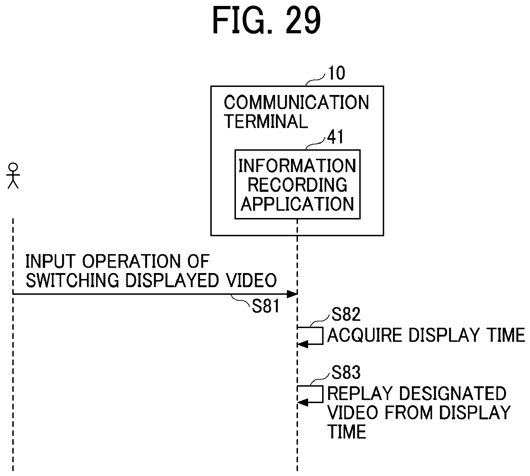

FIG. 29 is a sequence diagram of an example of a process in which the information recording application 41 switches the video to be displayed in the display field 241 in response to a user operation.

S81: The user inputs an operation for switching the video to be displayed, that is, operates the video selection menu 249. The operation reception unit 12 implemented by the information recording application 41 receives the switching operation.

S82: The video replay unit 19 implemented by the information recording application 41 acquires the current display time of the video displayed in the display field 241 at the reception of the switching operation.

S83: The video replay unit 19 displays the video (as a switched content to be displayed) designated by the switching operation, in the display field 241 from a scene corresponding to the display time acquired at the reception of the switching operation.

As described above, even when the content to be displayed is switched to the switched content selected from the items a to c, the target video can be displayed from the scene corresponding to the display time at which the switching operation is received.

In FIG. 29, the communication terminal 10 switching the video using record download by the information recording application 41. Alternatively, the information processing system 50 may switch the video to be displayed. For example, when a web application provided by the information processing system 50 displays the record, the information processing system 50 performs such processing.

### Displaying Text Data corresponding to Video

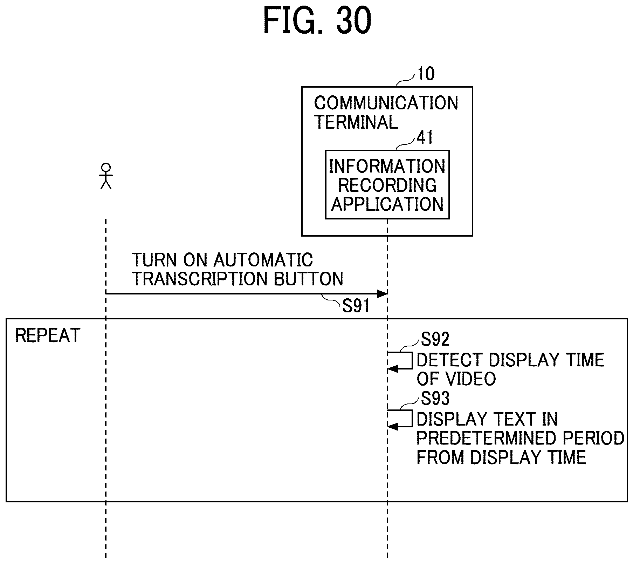

Next, with reference to FIG. 30, a description will be given of displaying text data corresponding to a video by the information recording application 41. FIG. 30 is a sequence diagram illustrating a process in which the information recording application 41 displays the text data corresponding to the display time of the video displayed in the display field 241, based on the time information "time" (time elapsed from the start of the recording to the utterance of a specific speech) stored in the data structure illustrated in FIG. 12.

S91: The user turns on the transcription button 242 on the video replay screen 240.

The operation reception unit 12 implemented by the information recording application 41 receives the operation.

S92: The video replay unit 19 implemented by the information recording application 41 repeatedly acquires the current display time of the video displayed in the display field 241.

S93: The video replay unit 19 compares the item "time" (illustrated in FIG. 12) included in the text data with the display time. When there is a character string of the "text" within a predetermined period from the display time, the video replay unit 19 displays the character string in the text display field 243. Therefore, for example, the character string of the "text" is displayed in time series from top to bottom in accordance with the display time.

Since the text data is displayed corresponding to the scenes recorded in the video in this way, the user can easily confirm the remarks at the time of a specific scene in the video.

In FIG. 30, the information recording application 41 associates the video with the text data. Alternatively, the information processing system 50 may perform such synchronization processing. In this case, the information recording application 41 transmits the display time to the information processing system 50. Then, the information processing system 50 returns text data corresponding to the display time to the information recording application 41.

### Search for Text Data

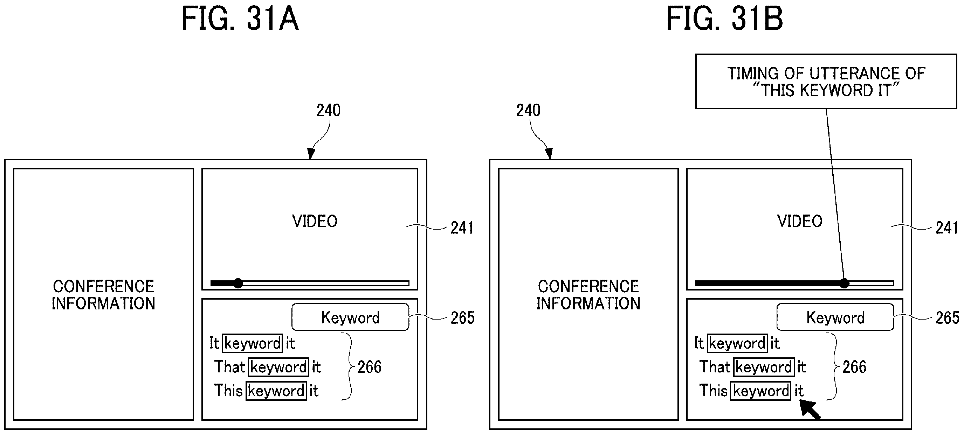

Next, with reference to FIGS. 31A to 32, a description will be given of searching text data and the corresponding display of a video by the information recording application 41.

FIGS. 31A and 31B are schematic diagrams illustrating search of text data and the corresponding display of a video.

In FIG. 31A, the user inputs "keyword" in a search window 265 and searches the text data for this keyword. The search unit 22 searches the text data for "keyword" and displays "It keyword it", "that keyword it", and "this keyword it" as search results 266.

In FIG. 31B, the user selects "this keyword it" with a pointing device. When the operation reception unit 12 receives the selection of "this keyword it", the video replay unit 19 acquires the time associated with "this keyword it" from the text data. The video replay unit 19 displays the currently displayed video in the display field 241 from the time (time elapsed from the start of recording to the utterance. The corresponding scene of the video may be displayed as a still image.

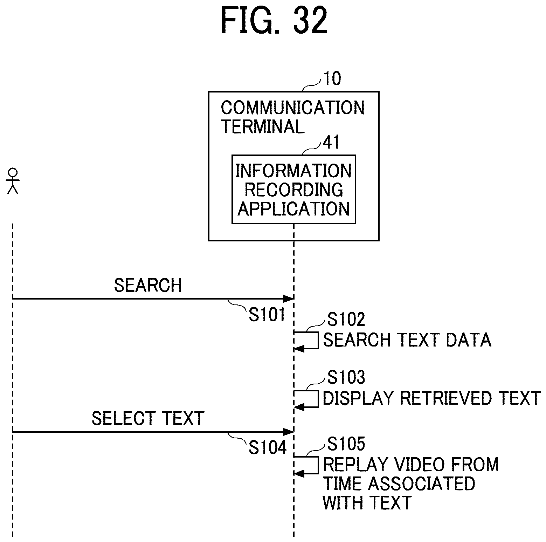

FIG. 32 is a sequence diagram illustrating an example of a process in which the information recording application 41 displays the video in the display field 241 in association with the retrieved text data.

S101: The user inputs a keyword of the search and instructs the search. The operation reception unit 12, which is implemented by instructions from the CPU 501 operating according to the information recording application 41, receives the instruction of the search.

S102: The search unit 22, which is implemented by instructions from the CPU 501 operating according to the information recording application 41, searches the text data for the keyword.

S 103: The display control unit 13 displays a list of character strings of the text as search results (retrieved text).

S104: The user selects one of the character strings of the "text." The operation reception unit 12 implemented by the information recording application 41 receives the selection.

S105: The video replay unit 19 implemented by the information recording application 41 displays the video from the time associated with the selected character string of the "text."

In this way, when the text data is searched, the video is displayed corresponding to the text data. Thus, the record display system 100 can saves the user from searching for the scene at which a specific utterance has occurred.

Although the information recording application 41 searches text data and displays a video in FIG. 32, this processing may be performed by the information processing system 50. In this case, the information recording application 41 transmits a keyword to the information processing system 50, and the information processing system 50 searches for text data for the keyword. The information processing system 50 transmits the search result to the information recording application 41. The information recording application 41 transmits the character string of the "text" selected by the user to the information processing system 50. The information processing system 50 requests the information recording application 41 to perform display from the "time" associated with the character string of the "text." When the information processing system 50 displays the video, the video is transmitted from the "time" associated with the selected character string of the "text."

As described above, the record display system 100 according to the present embodiment simultaneously or selectively displays a panoramic image of the surroundings including the user, a talker image, and the screen of an application (such as the teleconference application 42) displayed in a teleconference. When a participant or someone who has not attended the teleconference views the video as the minutes, the teleconference is reproduced with the realism. Further, the record display system 100 displays both the screen information displayed by the application (e.g., the teleconference application) selected to be included in the record and the image information of the surroundings of the device at the site (e.g., in a conference room) recorded from the start of the recording to the end of the recording. Accordingly, even when the screen displayed by the teleconference application 42 is switched, the record display system 100 can display the record of the content of the teleconference (telecommunication) and scenes of the site (e.g., scenes in a conference room) recorded thoroughly. Further, the information recording application 41 can display the video and the text data in association with each other. In addition, the information recording application 41 can selectively display a video in accordance with a user operation. The information recording application 41 can display the video in association with a character string (matched text) retrieved in the search.

While example embodiments of the present disclosure have been described, the present disclosure is not limited to the details of the embodiments described above.

For example, the communication terminal 10 and the meeting device 60 may be integral with each other. In one example, the meeting device 60 is externally attached to the communication terminal 10. The meeting device 60 may be implemented by a spherical camera, a microphone, and a speaker connected to one another by cables.

The meeting device 60 may be disposed also at the second site 101. The meeting device 60 at the second site 101 separately creates a video (combined with audio) and text data. Multiple meeting devices 60 may be provided at a single site. In this case, multiple records are created for each meeting device 60.

The arrangement of the panoramic image 203, the talker image 204, and the screen of the application in the video in the present embodiment is merely an example. The panoramic image 203 may be displayed below the talker images 204. The record display system 100 may allow the user to change the arrangement or allow the user to individually turn on and off the display of the panoramic image 203 and the talker images 204 during replay of the video.

The functional configurations illustrated in, for example, FIG. 7 are divided according to main functions in order to facilitate understanding of processing executed by the communication terminal 10, the meeting device 60, and the information processing system 50. The way of dividing processing in units or the name of the processing unit do not limit the scope of the present invention. The processes performed by the communication terminal 10, the meeting device 60, and the information processing system 50 may be divided into a greater number of processing units in accordance with the content of the processing. In addition, a single processing unit can be further divided into a plurality of processing units. For example, a system for creating a video may be separate from a system for displaying the video.

The apparatuses or devices described in one embodiment are just one example of multiple computing environments that implement the one embodiment in this specification. In some embodiments, the information processing system 50 includes multiple computing devices, such as a server cluster. The multiple computing devices communicate with one another through any type of communication link including, for example, a network or a shared memory, and perform the operations described in the present disclosure.

The information processing system 50 may share the processing steps disclosed herein, for example, steps in FIG. 23 or the like in various combinations. For example, a process performed by a predetermined unit may be performed by multiple information processing apparatuses included in the information processing system 50. Further, the elements of the information processing system 50 may be combined into one server apparatus or are allocated to multiple apparatuses.

Each of the functions of the described embodiments may be implemented by one or more processing circuits or circuitry. The "processing circuit or circuitry" in the present specification includes a programmed processor to execute each function by software, such as a processor implemented by an electronic circuit, and devices, such as an application specific integrated circuit (ASIC), a digital signal processor (DSP), a field programmable gate array (FPGA), and conventional circuit modules arranged to perform the recited functions.

The present disclosure includes the following aspects.

### Aspect 1

A record display system includes an information recording application executed by a communication terminal.

The information recording application includes a display unit that displays a video created based on screen information and surrounding image information. The screen information is information having displayed by a teleconference application selected on the information recording application. The surrounding image information represents an image of surroundings of a device captured by the device.

The display unit displays the surrounding image information, talker image information cut out from the surrounding image information, and the screen information.

### Aspect 2

In the record display system according to Aspect 1, the screen information is information that is displayed in a form of a window by an application being executed and is acquired as an image by the information recording application, and the application being executed includes the teleconference application.

### Aspect 3

In the record display system according to Aspect 1 or 2, the surrounding image information around the device is image information acquired by capturing, with the device, a 360-degree area surrounding the device.

### Aspect 4

In the record display system according to any one of Aspects 1 to 3, the surrounding image information around the device is transmitted from the device installed at a site to the information recording application.

### Aspect 5

In the record display system according to Aspect 1, the display unit further displays text data on the same screen on which the vide is displayed, simultaneously with the video. Text data is based on audio data collected by the device and audio data output by the communication terminal.

### Aspect 6

In the record display system according to Aspect 5, the text data is based on data obtained by combining the audio data collected by the device and the audio data output by the communication terminal, and
the display unit displays the text data obtained by converting the combined audio data by speech recognition.

### Aspect 7

In the record display system according to Aspect 5 or 6, the display unit displays the text data in a scrolling manner in association with a display time of the video.

### Aspect 8

The record display system according to Aspect 5 or 6, further includes a search unit to search the text data for a keyword, and
a display control unit to display a part of the text data matched the keyword.

When the part of the text data is selected, the display unit displays a scene of the video at an utterance time associated with the part of the text data.

### Aspect 9

In the record display system according to any one of Aspects 1 to 8, the video includes the surrounding image information, the talker image information cut out from the surrounding image information, and the screen information.

The display unit switches a content to be displayed among a) the surrounding image information and the talker image information, b) the screen information, and c) the talker image information and the screen information in accordance with a switching operation of a user.

### Aspect 10

In the record display system according to Aspect 9, after the switching of the content to be displayed among a) the surrounding image information and the talker image information, b) the screen information, and c) the talker image information and the screen information, the display unit displays a) the surrounding image information and the talker image information, b) the screen information, or c) the talker image information and the screen information from a display time at a switching operation by the user.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A display system comprising:
a display unit (19) configured to display, on a display, a record of a communication in a form of a video created based on screen information and surrounding image information, the screen information having been displayed by a teleconference application on a communication terminal participating in the communication and acquired by an information recording application, the surrounding image information having been acquired by a device and representing an image of surroundings around the device,
wherein the display unit (19) is configured to display the surrounding image information, talker image information cut out from the surrounding image information, and the screen information, the talker image information representing a person speaking in the communication.

2. The display system according to claim 1,
wherein the screen information is obtained as an image of a window displayed by an application executed in the communication, and the application includes the teleconference application.

3. The display system according to claim 1 or 2,
wherein the surrounding image information represents an image of a 360-degree area surrounding the device, captured by the device.

4. The display system according to any one of claims 1 to 3,
wherein the surrounding image information is transmitted from the device installed at a site.

5. The display system according to claim 1,
wherein the display unit (19) is further configured to display text data on a same screen on which the record is displayed, simultaneously with the record, the text data being based on audio data collected by the device and audio data output by the communication terminal participating in the communication.

6. The display system according to claim 5,
wherein the text data is based on combined data of the audio data collected by the device and the audio data output by the communication terminals participating in the communication, and
the text data is obtained by speech recognition of the combined data.

7. The display system according to claim 5 or 6,
wherein the display unit (19) is configured to scroll the text data so as to display the text data in association with a display time of the record.

8. The display system according to claim 5 or 6, further comprising:
a search unit (22) configured to search the text data for a keyword; and
a display control unit (13) configured to display a matched text retrieved, as a match with the keyword, from the text data,
wherein the display unit (19) is configured to display a scene of the record at an utterance time associated with the matched text in a case where the matched text is selected.

9. The display system according to any one of claims 1 to 8, further comprising an operation reception unit (12) configured to receive an operation by a user,
wherein the display unit (19) is configured to switch a content to be displayed to a switched content selected from a) the surrounding image information and the talker image information, b) the screen information, and c) the talker image information and the screen information in accordance with a switching operation of a user.

10. The display system according to claim 9,
wherein the display unit (19) is configured to acquire a display time of the record at a reception of the switching operation, and
wherein, after switching the content in accordance with the switching operation, the display unit (19) is configured to display the switched content from a scene corresponding to the display time acquired at the reception of the switching operation.

11. A display method comprising:
displaying, on a display, a record of a communication in a form of a video created based on screen information and surrounding image information, the screen information having been displayed on a communication terminal participating in the communication and acquired by an information recording application, the surrounding image information having been acquired by a device and representing an image of surroundings around the device,
wherein the displaying includes displaying the surrounding image information, talker image information cut out from the surrounding image information, and the screen information, the talker image information representing a person speaking in the communication.

12. A carrier medium carrying computer readable codes for controlling a computer system to carry out a method, the method comprising:
displaying, on a display, a record of a communication in a form of a video created based on screen information and surrounding image information, the screen information having been displayed on a communication terminal participating in the communication and acquired by an information recording application, the surrounding image information having been acquired by a device and representing an image of surroundings around the device,
wherein the displaying includes displaying the surrounding image information, talker image information cut out from the surrounding image information, and the screen information, the talker image information representing a person speaking in the communication.
